# EUROPÄISCHE PATENTSCHRIFT

(11) **EP 3 027 361 B1**
(45) Veröffentlichungstag und Bekanntmachung des Hinweises auf die Patenterteilung: **27.12.2017**
(21) Anmeldenummer: 14745083.7
(22) Anmeldetag: 25.07.2014
(51) Int. Cl.: B24B 23/04, B24B 45/00, B24B 23/02

(54) **WERKZEUGMASCHINE MIT WERKZEUGAUFNAHMEEINRICHTUNG**
MACHINE TOOL WITH TOOL-ACCOMMODATING DEVICE
MACHINE-OUTIL ÉQUIPÉE D'UN DISPOSITIF DE RÉCEPTION D'OUTIL

(30) Priorität: 01.08.2013 DE 202013006901 U
(43) Veröffentlichungstag der Anmeldung: 08.06.2016
(73) Patentinhaber: C. & E. Fein GmbH, 73529 Schwäbisch Gmünd-Bargau (DE); Robert Bosch GmbH, 70469 Stuttgart (DE)
(72) Erfinder: KLABUNDE, Olaf, 89537 Giengen/Brenz (DE); BLICKLE, Jürgen, 73035 Göppingen (DE); THOMASCHEWSKI, Walter, 70794 Filderstadt (DE); BEK, Fabian, 73560 Böbingen (DE); DELFINI, Stefano, CH-2544 Bettlach (CH); FELLMANN, Willi, CH-4537 Wiedlisbach (CH); LÜSCHER, Bruno, CH-4800 Zofingen (CH); BOZIC, Milan, CH-4500 Solothurn (CH); MATHYS, Thomas, CH-3250 Lyss (CH); GROLIMUND, Daniel, CH-4528 Zuchwil (CH)
(74) Vertreter: Wallinger, Michael
(86) Internationale Anmeldenummer: PCT/EP2014/002050
(87) Internationale Veröffentlichungsnummer: WO 2015/014469

(56) Entgegenhaltungen:
- DE-A1-102011 005 818
- DE-A1-102011 085 561

## Beschreibung

Die vorliegende Erfindung betrifft eine Werkzeugmaschine, insbesondere eine handgeführte Werkzeugmaschine, die eine sich um eine Antriebsachse bewegende Antriebseinrichtung aufweist, entsprechend dem Oberbegriff des Anspruchs 1, wie z.B. aus der DE102011085561 A1 bekannt. Die Erfindung wird nachfolgend vorwiegend am Beispiel einer handgeführten Werkzeugmaschine beschrieben, welche dafür vorgesehen ist, mit einer Werkzeugeinrichtung zur Bearbeitung eines Werkstücks oder einer Werkstückanordnung verwendet zu werden. Die Werkzeugmaschine weist dabei insbesondere eine sich um eine Antriebsachse dreh-oszillierend oder insbesondere kontinuierlich rotierend, bewegende Antriebseinrichtung auf. Diese Einschränkung der Darstellung ist aber nicht als Einschränkung der Anwendungsmöglichkeiten einer solchen Werkzeugeinrichtung zu verstehen.

Eine Werkzeugmaschine ist eine Vorrichtung, die ein oder mehrere Antriebsmotoren und ggf. eine oder mehrere Getriebeeinrichtungen aufweist. Die Antriebseinrichtung einer Werkzeugmaschine ist das Bauteil bzw. sind die Bauteile, mit denen das Drehmoment auf das Werkzeug aufgebracht wird, also üblicherweise eine Antriebswelle, eine Antriebsspindel oder dergleichen.

Eine handgeführte Werkzeugmaschine weist eine Trageeinrichtung, insbesondere Griffe und dergleichen auf, mit denen die Werkzeugmaschine mit dem daran befestigten Werkzeug von einer Bedienungskraft getragen und geführt werden kann. Typischerweise sind handgeführte Werkzeugmaschinen mit einem elektrischen Antriebsmotor versehen, es sind aber auch andere Bauarten, wie z. B. hydraulisch, pneumatisch oder mit Muskelkraft betriebene Werkzeugmaschinen bekannt.

Im Stand der Technik ist eine Vielzahl von Werkzeugmaschinen bekannt, die dafür vorgesehen sind, mit einer Werkzeugeinrichtung verwendet zu werden, die eine umlaufende oder dreh-oszillierende Antriebseinrichtung aufweist. Derartige Werkzeugeinrichtungen sind z. B. Bohrer, Schleif- und Trennscheiben, Kreissägen, etc. Diese Werkzeugeinrichtungen sind mit ihrer Antriebseinrichtung an der Abtriebseinrichtung der Werkezugmaschine befestig- und auswechselbar. Die Abtriebseinrichtung bewegt sich - je nach Einsatz, Werkzeugeinrichtung und Werkzeugmaschine - mit einer Drehzahl zwischen nahe 0 bis zu einigen 1000 Umdrehungen/min., in Extremfällen kann diese aber auch deutlich höher drehen. Die Werkzeugeinrichtung wird beim Betrieb mit mehr oder weniger hohem Anpressdruck in Kontakt mit einem Werkstück oder einer Werkstückanordnung gebracht, an dem es dann den entsprechenden Bearbeitungsvorgang ausführt. Die Werkzeugmaschinen werden häufig multifunktional eingesetzt, d.h. beispielsweise zum Sägen, Schleifen, Schaben, Verglasen - hierunter ist vorliegend insbesondere das Entfernen, von Glasscheiben aus einer Fahrzeugkarosserie, vorzugsweise das Durchtrennen einer Kleberaupe an einer solchen Scheibe, zu verstehen, der Fachmann spricht dabei auch vom Ausglasen - oder dergleichen. Innerhalb eines Einsatzbereichs müssen dabei in kurzer zeitlicher Abfolge, z. B. beim Schleifen, unterschiedliche Schleifwerkzeuge angetrieben werden, dies bedingt in vielen Anwendungsbereichen einem häufigen Wechsel der Werkzeugeinrichtungen. Die Zeit, welche für einen Wechsel der Werkzeugeinrichtung aufgewendet werden muss, wirkt sich direkt auf die mit der Werkzeugmaschine erreichbare Produktivität aus. Weiter ist es von hoher Bedeutung, dass die Werkzeugmaschine die Werkzeugeinrichtung besonders sicher aufnehmen kann, denn eine im Sinne der Positionierung der Werkzeugeinrichtung gegenüber der Werkzeugmaschine ungenau aufgenommenen Werkzeugeinrichtung führt zu einer Verkürzung der Standzeit dieser, darüber hinaus ergibt sich aus einer nicht sicher aufgenommenen Werkzeugeinrichtung ein erhebliches Gefahrenpotential, insbesondere für den Maschinenbediener.

Unter einer Werkzeugmaschine mit dreh-oszillierender Antriebseinrichtung wird hier eine Werkzeugmaschine mit einer Bewegung der Antriebseinrichtung verstanden, bei der die Antriebseinrichtung sich ausgehend von einer Mittellage in einer ersten Drehrichtung bewegt, zum Stillstand abgebremst wird und sich dann in umgekehrter Drehrichtung wieder bis zum Stillstand bewegt.

Der Winkelabstand von der Mittellage zur jeweiligen Endlage kann typischerweise bis zu 5° betragen, üblich sind allerdings bei ausgeführten Maschinen meist geringere Winkel von 1° bis 2,5°, was einer Gesamtwinkelbewegung (1. - 2. Endlage) von 2° bis 5° entspricht. Diese Oszillationsbewegung wird typischerweise zwischen 5.000 und 50.000 mal pro Minute ausgeführt, es sind allerdings geringere und auch höhere Oszillationsfrequenzen (hier ausgedrückt als Schwingungen/min.) möglich.

Unter einer Werkzeugmaschine mit rotierender Antriebseinrichtung wird hier eine Werkzeugmaschine mit einer Bewegung der Antriebseinrichtung verstanden, bei der die Antriebseinrichtung fortlaufend, mit variabler oder konstanter Geschwindigkeit in eine Richtung bewegt. Bei solchen Werkzeugmaschinen kann auch eine Drehrichtungsumkehr ermöglicht sein, welche dann aber in der Regel, insbesondere bei einer Bohrmaschine mit Spiralbohrer anders als bei einer Schleifmaschine mit einem Schleifwerkzeug mit unbestimmter Schneide, auch einen Wechsel der Werkzeugeinrichtung bedingt. Die Drehgeschwindigkeit solcher Werkzeugmaschinen reicht von 0 bis zu einigen hundert 1/min, wie insbesondere bei handgeführten Bohrmaschinen, über mehrere tausend 1/min, wie insbesondere bei Winkelschleifern und Kreissägen, bis hin zu mehreren zehntausend 1/min insbesondere für Sonderanwendungen.

Die DE 10 2011 085 561 A1 zeigt eine Handwerkzeugmaschinenspannvorrichtung, insbesondere eine Oszillationshandwerkzeugmaschinenspannvorrichtung, mit zumindest einer Spanneinheit zu einem Festspannen eines Bearbeitungswerkzeugs in einer Axialrichtung und mit zumindest einer Bedieneinheit zur Betätigung der Spanneinheit, wobei die Bedieneinheit zu einer drehfesten Kopplung der Bedieneinheit mit der Spanneinheit wenigstens ein Klauenkupplungselement aufweist, das zumindest im Wesentlichen parallel zur Axialrichtung beweglich gelagert ist.

Die DE 10 2011 005 818 A1 zeigt eine Werkzeugmaschinenspannvorrichtung, insbesondere eine Handwerkzeugmaschinenspannvorrichtung, mit zumindest einer Spanneinheit, die zumindest ein Spannelement zu einem Festspannen eines Bearbeitungswerkzeugs in einer Axialrichtung, zumindest eine Bedieneinheit zur Betätigung des Spannelements sowie zumindest einen an dem Spannelement angeordneten Spannkopf aufweist, wobei die Werkzeugmaschinenspannvorrichtung zumindest eine Einstelleinheit aufweist, die dazu vorgesehen ist, eine Lageveränderung einer axialen Projektionsfläche des Spannkopfs zur Erzielung einer axialen Überdeckung zu erreichen.

Der vorliegenden Erfindung liegt die Aufgabe zugrunde, die Werkzeugmaschine so zu gestalten, dass eine Werkzeugeinrichtung zuverlässig an dieser aufgenommen werden kann.

Diese Aufgabe wird durch den Gegenstand des Anspruchs 1 gelöst.

Zu bevorzugende Weiterbildungen der Erfindung sind Gegenstand der Unteransprüche.

Erfindungsgemäß weist eine Werkzeugmaschine eine Werkzeugaufnahmeeinrichtung auf, mit der die Werkzeugeinrichtung so an die Werkzeugmaschine befestigt werden kann, dass deren Antriebsachse und eine Werkzeug-Drehachse im Wesentlichen zusammenfallen. Es ist insbesondere aber auch ermöglicht, dass die Werkzeug-Drehachse außerhalb der Werkzeugkontur liegt. Der Begriff "Antriebsachse" und "Werkzeug-Drehachse" bezeichnet dabei die geometrische Drehachse der Werkzeugmaschine bzw. der Werkzeugeinrichtung.

Die Werkzeugaufnahmeeinrichtung weist jeweils wenigstens eine Spanneinrichtung, eine Halteeinrichtung und eine Sperreinrichtung auf. Eine Werkzeugmaschine kann auch mehrere dieser Werkzeugaufnahmeeinrichtungen aufweisen, insbesondere zwei oder drei.

Die Halteeinrichtung oder wenigstens ein Teil dieser, ist zwischen wenigstens zwei Positionen bewegbar, wobei die erste dieser beiden Positionen eine geöffnete Position ist und die zweite eine geschlossenen. Dabei kann, wenn sich die Halteeinrichtung in der ersten Position befindet, eine Werkzeugeinrichtung in die Werkzeugaufnahmeeinrichtung eingesetzt werden oder aus dieser entnommen werden. In der zweiten geschlossenen Position wird mittels der Halteeinrichtung eine Werkzeugeinrichtung in der Werkzeugaufnahmeeinrichtung gehalten, insbesondere ist es dann nicht möglich eine Werkzeugeinrichtung in die Werkzeugaufnahmeeinrichtung einzusetzen.

Durch die Spanneinrichtung wird die Halteeinrichtung, vorzugsweise von der ersten geöffneten Position in Richtung der zweiten geschlossenen Position, mit einer Spannkraft beaufschlagt. Vorzugsweise weist eine Spanneinrichtung eine elastisch federnde Einrichtung auf. In einem besonders einfachen Fall weist die Spanneinrichtung insbesondere eine Spiral- oder Tellerfedereinrichtung auf, es sind aber auch eine Reihe anderer Federeinrichtungen vorstellbar, wie nachfolgend ausgeführt wird. Unter der Spannkraft ist dabei im Sinne der Erfindung eine Kraftwirkung zu verstehen, also insbesondere ein Kraftvektor oder ein Paar von Kraftvektoren, insbesondere also ein Drehmoment.

Auch die Sperreinrichtung ist zwischen wenigstens zwei Positionen bewegbar. Sowohl für die Halteeinrichtung wie auch für die Sperreinrichtung ist es vorteilhaft ermöglicht, dass diese auch weitere Positionen einnehmen können, insbesondere eine Transportposition sowie eine Montage-Demontageposition können vorgesehen sein. Wobei eine Transportposition insbesondere so eingerichtet ist, dass die Werkzeugmaschine besonders vorteilhaft transportiert werden kann und eine Montage-Demontageposition dazu vorgesehen ist, dass die Werkzeugaufnahmeeinrichtung in der Werkzeugmaschine montiert oder demontiert werden kann. Die Sperreinrichtung ist darüber hinaus dazu eingerichtet, mit der Halteeinrichtung zusammenzuwirken. Dabei ist unter dem Zusammenwirken insbesondere zu verstehen, dass die Bewegung der Halteeinrichtung durch die Sperreinrichtung mittelbar oder unmittelbar beeinflussbar ist. Die Bewegung der Halteeinrichtung ist durch die Sperreinrichtung insbesondere blockierbar, wenn sich die Sperreinrichtung in der Sperrposition befindet. Dabei ist unter dem Blockieren insbesondere zu verstehen, dass eine Bewegung der Halteeinrichtung in wenigstens eine Richtung, vorzugsweise in alle Richtung, verhindert wird.

Befindet sich die Sperreinrichtung in einer von der Sperrposition abweichenden Position ist es der Halteeinrichtung insbesondere ermöglicht, sich wenigstens in eine Richtung, vorzugsweise in Richtung von der ersten geöffneten in Richtung auf die zweite geschlossene Position zu bewegen.

Die Sperreinrichtung ist vorteilhaft so gestaltet, dass diese durch die Werkzeugeinrichtung betätigt werden kann. Unter dem Betätigen ist dabei zu verstehen, dass von der Werkzeugeinrichtung mittelbar oder unmittelbar eine Kraftwirkung auf die Sperreinrichtung aufbringbar ist. Die Sperreinrichtung ist durch diese Kraftwirkung aus der Sperrposition in die Entsperrposition bewegbar.

Durch das Betätigen der Sperreinrichtung durch die Werkzeugeinrichtung ist damit also insbesondere die Bewegung der Halteeinrichtung von der ersten geöffneten in die zweite geschlossene Position freigebbar. Insbesondere durch diese Art der Betätigung ist ein besonders schnelles und einfaches Einsetzen der Werkzeugeinrichtung in die Werkzeugmaschine ermöglicht.

Unter einem dreh-oszillierenden oder einem vollständig rotierenden Antrieb der Werkzeugeinrichtung, so wie dieser vorliegend diskutiert wird, ist insbesondere kein huboszillierender Antrieb, wie dieser insbesondere von Hubsägeeinrichtungen bekannt ist, zu verstehen. Unter einer Hubsägeeinrichtung ist insbesondere eine Stichsäge-, Säbelsäge- oder Fuchsschwanzsägeeinrichtung oder dergleichen zu verstehen.

In einer bevorzugten Ausführungsform weist die Spanneinrichtung wenigstens eine Federeinrichtung auf. Dabei ist diese Federeinrichtung aus einer Gruppe von Einrichtungen ausgewählt, welche wenigstens folgende Elemente aufweist:
- Gas- oder Öldruckfedereinrichtungen,
- Blatt- oder Tellerfedereinrichtungen,
- Spiralfedereinrichtungen,
- Schraubenfedereinrichtungen,
- Torsionsfeder-, insbesondere Drehstabfeder-, und
- Elastomerfedereinrichtungen.

Weiter vorzugsweise weist eine Spanneinrichtung eine Kombination aus mehreren dieser Einrichtungen auf. Bevorzugt weist eine Spanneinrichtung mehrere artgleiche Federeinrichtungen auf, wobei diese vorzugsweise in Reihen- oder Parallelschaltungen angeordnet sein können. Insbesondere durch die Anordnung mehrerer Federeinrichtungen in Parallelschaltungen kann die Ausfallsicherheit der Spanneinrichtung verbessert werden. Insbesondere durch die Anordnung mehrerer Federeinrichtungen in Reihenschaltung kann eine besonders flexible Abstimmung der Spannkraftwirkung erreicht werden.

In einer bevorzugten Ausführungsform ist die Halteeinrichtung wenigstens in einer Drehrichtung drehbar gelagert. Weiter vorzugsweise ist die Halteeinrichtung in wenigstens einer Richtung translatorisch bewegbar gelagert. Dabei ist unter einer translatorischen Bewegung insbesondere eine gradlinige Bewegung zu verstehen. Weiter vorzugsweise ist die Halteeinrichtung so gelagert, dass diese sich bei der Bewegung von der ersten geöffneten in die zweite geschlossene Position sowohl verdreht als auch verschiebt. Insbesondere durch eine derart allgemeine Bahnkurve (Verdreh- und Verschiebebewegung) kann eine besonders schnelle und sichere Bewegung der Halteeinrichtung von einer ersten geöffneten in eine zweite geschlossene Position erreicht werden. Vorzugsweise ist die Halteeinrichtung mit einer Gleitlagereinrichtung, bevorzugt mit einer Wälzlagereinrichtung gelagert. Weiter vorzugsweise ist eine Gleitlagereinrichtung als eine Buchse oder dergleichen ausgeführt, bevorzugt ist eine Wälzlagereinrichtung als eine Einrichtung ausgeführt, welche Kugeln, Rollen oder Tonnen als Wälzkörper aufweist. Insbesondere durch eine Gleitlagerung kann die Halteeinrichtung besonders betriebssicher mit geringer Ausfallwahrscheinlichkeit gelagert werden. Insbesondere durch eine Wälzlagerung kann die Halteeinrichtung besonders leicht beweglich gelagert werden und damit können die Bedienkräfte zum Bewegen der Halteeinrichtung klein gehalten werden.

In einer bevorzugten Ausführungsform weist die Werkzeugmaschine eine Vielzahl dieser Halteeinrichtungen auf. Vorzugsweise weist die Werkzeugmaschine drei oder vier oder fünf oder sechs dieser Halteeinrichtungen auf. Besonders bevorzugt weist die Werkzeugaufnahmeeinrichtung 2 dieser Halteeinrichtungen auf. Insbesondere durch den Einsatz mehrerer dieser Halteeinrichtungen kann die Betriebssicherheit der Werkzeugmaschine verbessert werden.

In einer bevorzugten Ausführungsform weist die Werkzeugmaschine eine gerade Anzahl dieser Halteeinrichtungen, vorzugsweise genau zwei dieser Halteeinrichtungen, auf. Weiter vorzugsweise sind jeweils zwei dieser Halteeinrichtungen jeweils gegenläufig bewegbar gelagert. Weiter vorzugsweise sind jeweils zwei dieser Halteeinrichtungen mechanisch miteinander gekoppelt, insbesondere so, dass sich diese bezüglich ihrer Geschwindigkeit genau gegenläufig bewegen. Insbesondere durch die gegenläufige Bewegung dieser Halteeinrichtungen kann eine symmetrische Spannung der Werkzeugeinrichtung in der Werkzeugmaschine und damit eine besonders sichere Spannung der Werkzeugeinrichtung in der Werkzeugmaschine erreicht werden.

Von der Spanneinrichtung ist auf die Sperreinrichtung eine Sperrkraftwirkung aufbringbar. Diese Sperrkraftwirkung ist dann aufbringbar, wenn sich die Sperreinrichtung in der Sperrposition befindet. Von der Werkzeugeinrichtung ist auf die Sperreinrichtung eine Entsperrkraftwirkung aufbringbar. Diese Entsperrkraftwirkung ist der Sperrkraftwirkung entgegengerichtet. Die Sperreinrichtung bewegt sich insbesondere dann, wenn die Entsperrkraftwirkung größer als die Sperrkraftwirkung wird, wenigstens teilweise in Richtung der Entsperrkraftwirkung. Dadurch, dass die Entsperrkraftwirkung von der Werkzeugeinrichtung aufbringbar ist, ist es insbesondere besonders einfach ermöglicht, die Sperreinrichtung aus der Sperrposition heraus zu bewegen, dadurch ist ein besonders einfacher und schneller Werkzeugwechsel ermöglicht.

In einer bevorzugten Ausführungsform weist die Sperreinrichtung einen ersten Sperrflächenabschnitt und einen zweiten Sperrflächenabschnitt auf. Vorzugsweise kontaktiert dieser erste Sperrflächenabschnitt diesen zweiten mittelbar oder bevorzugt unmittelbar. Dabei ist unter dem mittelbaren Kontaktieren bzw. Berühren dieser Sperrflächenabschnitte zu verstehen, dass sich diese über ein Zwischenelement berühren. Unter einem solchen Zwischenelement ist vorzugsweise ein Gleit- oder Wälzkörper zu verstehen, vorzugsweise eine Rolle, eine Kugel, eine Hebeleinrichtung, ein Gleitschuh oder dergleichen. Unter dem unmittelbaren Berühren der beiden Sperrflächenabschnitte ist vorzugsweise zu verstehen, dass sich wenigstens diese beiden Abschnitte direkt berühren oder nur durch einen Gleit- oder Schmierfilm voneinander getrennt sind. Weiter vorzugsweise ist wenigstens eine Komponente der von der Spanneinrichtung aufgebrachten Spannkraft im Wesentlichen parallel zu einem Normalvektor auf wenigstens einen Abschnitt dieses ersten oder dieses zweiten Sperrflächenabschnitts. Weiter vorzugsweise weisen dieser erste und dieser zweite Sperrflächenabschnitt wenigstens teilweise, bevorzugt vollständig parallele Normalvektoren auf. Insbesondere dadurch, dass sich diese Sperrflächenabschnitte unmittelbar berühren, ist eine besonders einfache Sperreinrichtung erreichbar, welche dann besonders betriebssicher zu betreiben ist. Insbesondere dadurch, dass sich diese beiden Sperrflächenabschnitte mittels eines Zwischenelements berühren, ist es ermöglicht, eine Sperreinrichtung bereitzustellen, die ihr Betriebsverhalten nur geringfügig aufgrund äußerer Parameter, wie etwa der Temperatur, dem Verschmutzungsgrad oder dergleichen, verändert.

Die Spanneinrichtung weist wenigstens ein Bewegungselement auf. Dieses Bewegungselement ist so mit der Spanneinrichtung verbunden, dass dieses mit dieser mit bewegt wird. Dieses Bewegungselement ist entlang einer ersten Bewegungsrichtung bewegbar. Vorzugsweise ist diese Bewegungsrichtung wenigstens abschnittsweise rotatorisch und/oder translatorisch. Diese Sperreinrichtung weist eine Kontaktfläche auf, wobei diese Kontaktfläche insbesondere dazu eingerichtet ist, dass die Sperreinrichtung dieses Bewegungselement kontaktiert. Vorzugsweise kann diese Sperreinrichtung gegenüber diesem Bewegungselement gleit- oder wälzgelagert sein, bzw. berühren sich diese Sperreinrichtungen und dieses Bewegungselement in einem Gleit- oder Wälzkontakt. Eine solche gleitende Bewegung zwischen der Sperreinrichtung und diesem Bewegungselement ist insbesondere besonders einfach darzustellen und führt zu einer besonders betriebssicheren Betätigung des Bewegungselementes durch die Spanneinrichtung. Ein Wälzkontakt bzw. eine Wälzlagerung ist gegenüber äußeren Einflussparametern in der Regel unempfindlich und führt insbesondere daher zu einer besonders betriebssicheren Kontaktierung der Sperreinrichtung durch das Bewegungselement.

In einer bevorzugten Ausführungsform definiert ein Normalvektor auf diese Kontaktfläche in einem Berührpunkt des Bewegungselementes mit der Sperreinrichtung, insbesondere, wenn sich dieses in der Sperrposition befindet, einen Winkel γ₁. Die Größe des Winkels γ₁ kann insbesondere dadurch beeinflusst werden, dass der Verlauf der Kontaktfläche, bei entsprechend bekannter Bewegungsrichtung des Bewegungselementes, ausgewählt wird. Dabei wird diese Kontaktfläche vorzugsweise so gestaltet, dass der Winkel γ₁ größer ist als 80°, bevorzugt größere ist als 90° und besonders bevorzugt größer ist als 120°. Weiter vorzugsweise wird die Kontaktfläche so gestaltet, dass der Winkel γ₁ vorzugsweise kleiner oder gleich ist wie 315°, bevorzugt kleiner ist als 270° und besonders bevorzugt kleiner ist als 210°. Besonders bevorzugt ist der Winkel γ₁ im Wesentlichen 186°. In diesem Zusammenhang ist unter im Wesentlichen 186° ein Winkel von vorzugsweise 175° bis 195°, bevorzugt 180° bis 190° und besonders bevorzugt 185° bis 187° und ganz besonders bevorzugt 186° +/-0,5° zu verstehen. Durch die Wahl des Winkels γ₁ aus dem genannten Bereich ist es erreichbar, dass die Kraft zum Einsetzten der Werkzeugeinrichtung gering ist und zum anderen die Werkzeugaufnahmeeinrichtung sicher in der geöffneten Position gehalten wird. Die Kontaktfläche bildet in Zusammenhang mit diesem Bewegungselement insbesondere eine schiefe Ebene, daher ist die von dem Bewegungselement auf die Spanneinrichtung durch die entsprechende Wahl des Verlaufs der Kontaktfläche beeinflussbar, insbesondere ist dadurch eine Kraftverstärkung erreichbar. Durch eine hohe Spannkraft, welche insbesondere durch die Wahl des Verlaufs der Kontaktfläche erreichbar ist, kann ein besonders sicheres Halten der Werkzeugeinrichtung in der Werkzeugaufnahmeeinrichtung erreicht werden.

In einer bevorzugten Ausführungsform schließt der Normalvektor auf die Kontaktfläche in einem Berührpunkt des Bewegungselementes mit der Sperreinrichtung, insbesondere wenn sich diese in der Entsperrposition befindet mit der Bewegungsrichtung des Bewegungselements einen Winkel γ₂ ein. Dieser Winkel γ₂ ist vorzugsweise aus einem bestimmten Bereich ausgewählt, vorzugsweise ist der Winkel γ₂ kleiner oder gleich 180°, bevorzugt kleiner 135° und besonders bevorzugt kleiner 115°. Weiter vorzugsweise ist der Winkel γ₂ größer oder gleich 80°, bevorzugt größer als 95° und besonders bevorzugt größer als 105°. Weiter vorzugsweise ist der Winkel γ₂ abhängig von der Position der Sperreinrichtung, insbesondere wenn sich diese im Wesentlichen nicht in der Sperrposition befindet, so gewählt, dass dieser kleiner oder gleich 180°, bevorzugt kleiner 135° und besonders bevorzugt kleiner 115° und weiter vorzugsweise ist der Winkel γ₂ größer oder gleich 80°, bevorzugt größer als 95° und besonders bevorzugt größer als 105° und ganz besonders 108° bis 112°. Insbesondere durch die entsprechende Auswahl des Winkels γ₂ ist es ermöglicht, dass sich die Sperreinrichtung selbsttätig in der geöffneten Position hält. Insbesondere dadurch, dass sich die Sperreinrichtung in der geöffneten Position hält, ist ein schneller Werkzeugwechsel ermöglicht.

In einer bevorzugten Ausführungsform weist die Sperreinrichtung wenigstens ein erstes Hebelelement, ein zweites Hebelelement und ein Verbindungselement auf. In einer weiter bevorzugten Ausführungsform ist wenigstens ein erstes oder ein zweites, besonders vorzugsweise aber beide Hebelelemente drehbar gelagert. Dabei können diese Hebelelemente oder wenigstens eines dieser Hebelelemente, wälz- oder gleitgelagert sein. Weiter vorzugsweise ist dieses erste Hebelelement dazu eingerichtet, von diesem Verbindungselement in einem ersten Kontaktbereich kontaktiert zu werden. Weiter vorzugsweise ist dieses zweite Hebelelement dazu eingerichtet, von diesem Verbindungselement in einem zweiten Kontaktbereich kontaktiert zu werden. Dabei kann diese Kontaktierung jeweils mittels einer Wälz- oder Gleitlagerung geschehen. Das Verbindungselement kann die Hebelelemente oder eines dieser Hebelelemente mittelbar oder unmittelbar kontaktieren, dabei ist unter dem mittelbaren kontaktieren insbesondere zu verstehen, dass das Verbindungselement das Hebelelement mittels eines Zwischenelements wie einem Wälzkörper oder einem Gleitelement kontaktiert.

In einer bevorzugten Ausführungsform ist diese Sperreinrichtung derart ausgestaltet, dass sich diese in ihrer Sperrposition in einer Übertotpunktlage befindet. Dies wird insbesondere durch besondere geometrische Bedingungen und Lagen dieser Hebelelemente und des Verbindungselementes erreicht. Vorzugsweise weist eine durch diesen ersten Kontaktbereich und durch diesen zweiten Kontaktbereich verlaufende Verbindungsgerade einen Abstand a_1 zu diesem Drehpunkt d_2 des zweiten Hebelelementes auf. Weiter vorzugsweise wirkt entlang dieser Verbindungsgerade, auf dieses zweite Hebelelement, ausgehend von diesem ersten Hebelelement, eine Kraftwirkung F_1. Dabei ruft diese Kraftwirkung F_1 ein erstes Drehmoment T_1 auf dieses zweite Hebelelement um den Drehpunkt d_2 hervor. Insbesondere durch diese Anordnung der Hebelelemente wird das zweite Hebelelement in eine vordefinierte Richtung durch das Drehmoment T_1 gedrückt und somit eine sichere Lage für dieses erreicht.

In einer bevorzugten Ausführungsform wird beim Einsetzen der Werkzeugeinrichtung in die Werkzeugmaschine auf die Sperreinrichtung mittelbar oder unmittelbar eine Kraftwirkung durch die Werkzeugeinrichtung ausgeübt. Vorzugsweise wird dabei eine Kraftwirkung F_2 auf die zweite Hebeleinrichtung übertragen. Weiter vorzugsweise ist wenigstens eine Wirkrichtung dieser zweiten Kraftwirkung F_2 von diesem Drehpunkt d_2 der zweiten Hebeleinrichtung um einen Abstand a_2 beanstandet. Insbesondere durch diesen Abstand a_2 und diese zweite Kraftwirkung F_2 wird ein zweites Drehmoment T_2 auf das zweite Hebelelement hervorgerufen. Dabei ist die Größe des zweiten Drehmoments T_2 insbesondere von der Kraft beim Einsetzen der Werkzeugeinrichtung in die Werkzeugmaschine abhängig. Weiter vorzugsweise ist dieses erste Drehmoment T_1 diesem zweiten Drehmoment T_2 entgegengerichtet. Anders gesprochen führt insbesondere dieses zweite Drehmoment T_2 zu einer Bewegung dieses zweiten Hebelelementes, welche der Bewegung dieses Hebelelementes entgegen gerichtet ist, die durch dieses erste Drehmoment T_1 hervorgerufen wird, wenn das zweite Drehmoment T_2 das erste Drehmoment T_1 übersteigt. Weiter vorzugsweise bewegt das erste Drehmoment T_1 dieses zweite Hebelelement auf einen mechanischen Anschlag hin, von diesem mechanischen Anschlag bewegt sich das zweite Hebelelement insbesondere weg, wenn das zweite Drehmoment T_2 das erste Drehmoment T_1 übersteigt. Insbesondere durch diese Kraftverhältnisse lässt sich ein besonders sicheres, vorzugsweise aber auch einfaches Einsetzen der Werkzeugeinrichtung in die Werkzeugmaschine darstellen.

In einer bevorzugten Ausführungsform weist eine Verbindungsgerade welche durch diesen ersten Kontaktbereich und durch diesen zweiten Kontaktbereich verläuft, wenn sich die Sperreinrichtung in der Entsperrposition befindet, einen dritten Abstand a_3 zu diesen Drehpunkt d_2 des zweiten Hebelelements auf. Vorzugsweise wird von diesem ersten Hebelelement eine dritte Kraftwirkung F_3 in Richtung dieser Verbindungsgerade auf dieses zweite Hebelelement übertragen. Insbesondere durch diese Kraftwirkung F_3 und diesen Abstand a_3 wird ein drittes Drehmoment T_3 auf dieses zweite Hebelelement übertragen. Dabei wird darauf hingewiesen, dass insbesondere das erste und das zweite Drehmoment T_1/T_2 gleichzeitig auftreten können, da diese beiden Drehmomente auftreten können, wenn sich die Sperreinrichtung in der Sperrposition befindet. Das dritte Drehmoment T_3 tritt auf, wenn sich die Sperreinrichtung in der Entsperrposition befindet bzw. in diese bewegt wird. Insbesondere durch dieses dritte Drehmoment T_3 wird die Sperreinrichtung sicher in der Entsperrposition gehalten, dabei ist insbesondere kein weiterer Eingriff des Maschinenbedieners notwendig und das Aufnehmen der Werkzeugeinrichtung in der Werkzeugmaschine läuft besonders schnell und sicher ab.

In einer weiter bevorzugten Ausführungsform ist die Wirkrichtung dieses dritten Drehmoments T_3 der Wirkrichtung dieses ersten Drehmoments T_1 entgegen gerichtet.

In einer weiter bevorzugten Ausführungsform weist die Anschlusseinrichtung der Werkzeugmaschine einen Drehmomentübertragungsbereich auf. Dabei ist dieser Drehmomentübertragungsbereich zur Übertragung von Antriebskräften von der Werkzeugmaschine auf die Werkzeugeinrichtung eingerichtet. Dabei ist unter den Antriebskräften insbesondere eine lineare Kraftwirkung, ein Kräftepaar oder ein Drehmoment zu verstehen. Vorzugsweise wirkt ein solches Kräftepaar oder ein solches Drehmoment um die Antriebsachse herum. Dieser Drehmomentübertragungsbereich weist wenigstens zwei im Abstand zu der Antriebsachse angeordnete Abtriebsflächenbereiche auf. Dabei weist ein Abtriebsflächenbereich vorzugsweise eine Vielzahl von Flächenpunkten auf.

Der Begriff des Flächenpunktes ist geometrisch zu verstehen. Der Begriff wird verwendet, um den geometrischen Punkt zu charakterisieren, an welchem eine Tangentialebene an einer Fläche anliegt. Der Vektor auf dem Flächenpunkt senkrecht zur Tangentialebene beschreibt die Orientierung der Fläche in diesem Punkt in einen Raum, der z.B. durch ein dreidimensionales Koordinatensystem oder durch andere Bezugsebenen oder Bezugsflächen definiert ist.

Eine Fläche hat unendlich viele Flächenpunkte, da jeder Punkt der Fläche gleichzeitig auch ein Flächenpunkt im vorliegenden Sinne ist. Um eine einsinnig oder mehrsinnig gekrümmte Fläche für die Praxis zu beschreiben, genügt jedoch eine endliche Anzahl von Flächenpunkten. Unter dem Begriff einsinnig gekrümmt ist eine an jedem Punkt nur in eine Richtung gekrümmte Fläche, z.B. eine zylindrische Fläche, zu verstehen, unter dem Begriff mehrsinnig gekrümmt eine an wenigstens einem Punkt in mehrere Richtungen gekrümmte Fläche, z.B. eine Kugeloberfläche.

Eine ebene Fläche hat nur eine Tangentialebene, die mit der Fläche selbst zusammenfällt. Zur Charakterisierung einer ebenen Fläche genügt somit ein einzelner Flächenpunkt, wobei dies jeder beliebige Punkt der ebenen Fläche sein kann.

Da Flächenpunkte geometrische Punkte sind, sind sie auf der Fläche nicht sichtbar.

Weiter vorzugsweise sind Tangentialebenen an wenigstens einen, bevorzugt an mehrere und besonders bevorzugt an alle diese Flächenpunkte, gegenüber einer Axialebene geneigt. Weiter vorzugsweise sind Tangentialebenen an wenigstens einen, bevorzugt an mehrere und besonders bevorzugt an alle diese Flächenpunkte, gegenüber einer Radialebene geneigt. Dabei ist unter einer Radialebene insbesondere eine Ebene zu verstehen, welche orthogonal zu dieser Antriebsachse angeordnet ist, weiter vorzugsweise ist unter einer Axialebene eine Ebene zu verstehen, welche insbesondere die Antriebsachse beinhaltet. Insbesondere durch eine derartige Gestaltung des Drehmomentübertragungsbereichs ist eine spielfreie Aufnahme der Werkzeugeinrichtung an der Werkzeugmaschine und damit eine besonders sichere und schnelle Art der Befestigung der Werkzeugeinrichtung an der Werkzeugmaschine ermöglicht.

Gemäß einer bevorzugten Ausführungsform gibt es wenigstens einen Abtriebsflächenbereich, für den an keinem Flächenpunkt der Normalvektor an diesem Flächenpunkt auf einer Geraden liegt, die durch die Antriebsachse verläuft. Ein solcher Abtriebsflächenbereich ist also an keinem Flächenpunkt zur Antriebsachse hin orientiert, sondern der Abtriebsflächenbereich ist gegenüber der Antriebsachse "verdreht".

Wie bereits ausgeführt, sind die Abtriebsflächenbereiche vorzugsweise im Wesentlichen eben gestaltet. Dies bedeutet, dass die Abtriebsflächenbereiche einen ebenen Bereich mit im Wesentlichen gleicher Tangentialebene aufweisen, die aber durch Kanten, einseitig oder mehrseitige gekrümmte Flächen, etc. begrenzt sein können bzw. über Kanten oder über gewölbte Bereiche in andere Bereiche der Werkzeugeinrichtung übergehen können.

Der Vorteil der ebenen Abtriebsflächenbereiche liegt darin, dass dadurch eine Werkzeugaufnahmeeinrichtung geschaffen werden kann, die einerseits sowohl die Werkezugeinrichtung spielfrei aufnehmen kann - wenn diese entsprechend gestaltet ist - und bei welcher, bei entsprechenden Toleranzen und Werkstoffeigenschaften wie Elastizität, etc., eine Flächenberührung zwischen der Abtriebseinrichtung/Drehmomentübertragungsbereich, der Werkzeugmaschine und der Antriebseinrichtung der Werkzeugeinrichtung möglich ist, wodurch sich der Bereich der Kraftübertragung erhöht.

Gemäß einer weiteren bevorzugten Ausführungsform sind die Abtriebsflächenbereiche wenigstens abschnittsweise gekrümmt. Dabei kann die Krümmung sowohl einsinnig, als auch zweisinnig, konvex, konkav mit festen oder variablen Krümmungsradius ausgeführt sein.

Die gekrümmten Flächen können auch so gestaltet sein, dass sie durch ihre Formgebung und die Elastizität des Werkstoffes einer Elastizität unterworfen sind, durch die sich die Krümmung ändert und insbesondere durch die die Krümmung ab einer bestimmten Belastung im Wesentlichen verschwindet, d.h. also dann ein im Wesentlichen ebener Abtriebsflächenbereich gegeben ist.

In einer bevorzugten Ausführungsform weist die Werkzeugmaschine im Bereich des Drehmomentübertragungsbereichs wenigstens eine erste obere Begrenzungsebene und wenigstens eine zweite untere Begrenzungsebene auf. Dabei sind diese Begrenzungsebenen im Wesentlichen senkrecht zu dieser Antriebsdrehachse angeordnet. Weiter vorzugsweise sind diese beiden Begrenzungsebenen voneinander beabstandet. Bevorzugt ist jeder dieser Abtriebsflächenbereiche zwischen einer dieser ersten oberen und einer dieser zweiten unteren Begrenzungsebenen angeordnet, und zwar vorzugsweise so, dass der Abtriebsflächenbereich die jeweilige Begrenzungsebene berührt, aber nicht schneidet. Insbesondere durch die Anordnung wenigstens eines Abtriebsflächenbereichs zwischen diesen Begrenzungsebenen ist ein besonders großflächiger Abtriebsflächenbereich erreichbar und die Beanspruchung dieses Abtriebsflächenbereichs ist dementsprechend gering. Vorzugsweise ist eine erste Gruppe von Abtriebsflächenbereichen, wenigstens aber ein Abtriebsflächenbereich, zwischen einer dieser ersten oberen Begrenzungsebenen und einer dieser zweiten unteren Begrenzungsebenen angeordnet, und weiter vorzugsweise ist eine zweite Gruppe von Abtriebsflächenbereichen zwischen einer weiteren ersten oberen und einer weiteren zweiten unteren Begrenzungsebene angeordnet. Insbesondere durch die Gruppierung von mehreren Abtriebsflächenbereichen und Zuordnung dieser zu Begrenzungsebenen ist einerseits eine einfache Fertigung des Drehmomentübertragungsbereichs ermöglicht und andererseits eine besonders homogene Drehmomenteinleitung in die Werkzeugeinrichtung erreichbar.

In einer bevorzugten Ausführungsform erstreckt sich eine Vielzahl von Abtriebsflächenbereichen zwischen einer einzigen ersten oberen und einer einzigen zweiten unteren Begrenzungsebene. Weiter vorzugsweise erstrecken sich alle diese Abtriebsflächenbereiche zwischen einer einzigen ersten oberen und einer einzigen zweiten unteren Begrenzungsebene. Insbesondere durch die Erstreckung dieser Abtriebsflächenbereiche zwischen einer einzigen ersten oberen und einer einzigen zweiten unteren Begrenzungsebene ist ein Drehmomentübertragungsbereich mit geringem Bauraumbedarf und darüber hinaus mit geringem notwendigen Materialeinsatz bei der Herstellung erreichbar. Weiter vorteilhaft ist es, insbesondere durch diese Art der Gestaltung der Abtriebsflächenbereiche, ermöglicht, das Drehmoment besonders gleichmäßig und damit materialschonend auf die Werkzeugeinrichtung zu übertragen.

In einer bevorzugten Ausführungsform weist der Drehmomentübertragungsbereich eine Vielzahl von Abtriebsflächenbereichen auf. Vorzugsweise ist diese Vielzahl von Abtriebsflächenbereichen rotationssymmetrisch um die Antriebsachse angeordnet.

"Rotationssymmetrisch um die Antriebsachse" im Sinne der vorliegenden Anmeldung soll bedeuten, dass die Vielzahl von Abtriebsflächenbereichen durch Drehung um die Antriebsachse um wenigstens einen Winkel, der größer als 0° und kleiner als 360° ist, **-** oder auch um jeden beliebigen Winkel - geometrisch gesehen in sich selbst übergeht. Insbesondere beträgt einer dieser Winkel 360° / n, wobei n eine natürliche Zahl größer 1 ist.

Insbesondere durch eine rotationssymmetrische Anordnung der Abtriebsflächenbereiche ist es ermöglicht, Zusatzbeanspruchungen auf den Drehmomentübertragungsbereich zu verringern bzw. die Abtriebsflächenbereiche gleichmäßig zu beanspruchen und damit insbesondere eine erhöhte Lebensdauer zu erreichen.

In einer bevorzugten Ausführungsform sind wenigstens jeweils zwei dieser Abtriebsflächenbereiche symmetrisch zu einer Symmetrieebene angeordnet. Vorzugsweise fällt diese Symmetrieebene mit einer dieser Axialebenen zusammen. Vorzugsweise sind mehr als zwei dieser Abtriebsflächenbereiche symmetrisch zu einer Symmetrieebene angeordnet, bevorzugt vier. Dabei liegt in dieser Symmetrieebene insbesondere die Antriebsachse. Weiter vorzugsweise sind diese Abtriebsflächenbereiche im Wesentlichen aneinander stoßend angeordnet. Dabei ist unter einer aneinander stoßenden Anordnung im Sinne der Erfindung insbesondere auch eine solche Anordnung zu verstehen, wenn die Abtriebsflächenbereiche durch einen Übergangsbereich miteinander verbunden sind. Vorzugsweise kann ein solcher Übergangsbereich durch einen gekrümmt oder einen wenigstens abschnittsweise eben verlaufenden Flächenbereich gebildet sein. Weiter vorzugsweise schließt sich ein solcher Übergangsbereich an wenigstens einen, bevorzugt an beide dieser Abtriebsflächenbereiche tangential an. Insbesondere durch eine symmetrische und auch aneinanderstoßende Anordnung der Abtriebsflächenbereiche ist eine besonders hohe Stabilität des Drehmomentübertragungsbereichs und damit eine gute Kraftübertragung auf die Werkzeugeinrichtung erreichbar.

In einer bevorzugten Ausführungsform weist der Drehmomentübertragungsbereich eine Seitenwandung auf. Vorzugsweise verläuft diese Seitenwandung radial beabstandet von der Antriebsachse. Weiter vorzugsweise erstreckt sich diese Seitenwandung zwischen der ersten oberen und der zweiten unteren Begrenzungsebene. Bevorzugt weist diese Seitenwandung diese Abtriebsflächenbereiche auf. Insbesondere durch die Gestaltung des Drehmomentübertragungsbereichs mit einer Seitenwandung entsteht eine im Wesentlicher hohlkegelige Ausnehmung im Bereich des Drehmomentübertragungsbereichs, jedoch weist diese hohlkegelige Ausnehmung keinen kreisrunden Querschnitt auf, sondern einen Querschnitt mit variablem Abstand der Seitenwandung zur Antriebsachse in einer zu dieser Antriebsachse orthogonalen Ebene. Insbesondere durch die beschriebene Art der Ausgestaltung des Drehmomentübertragungsbereichs ist ein besonders stabiler Drehmomentübertragungsbereich und damit eine gute Drehmomenteinleitung in die Werkzeugeinrichtung erreichbar.

In einer bevorzugten Ausführungsform läuft diese Seitenwandung im Wesentlichen radial geschlossen um die Antriebsachse um. In einer weiteren Ausführungsform weist die Seitenwandung in ihrem Verlauf um die Antriebsachse Ausnehmungen bzw. Unterbrechungen auf. Insbesondere durch eine geschlossen umlaufende Seitenwandung ist ein besonders stabiler Drehmomentübertragungsbereich erreichbar; durch eine unterbrochene oder Ausnehmungen aufweisende Seitenwandung ist insbesondere eine besonders leichter und ein geringes Trägheitsmoment aufweisender Drehmomentübertragungsbereich erreichbar.

In einer bevorzugten Ausführungsform ist einer der Normalvektoren, auf eine dieser Tangentialebenen, in radialer Richtung von der Antriebsachse weg orientiert. Es wird darauf hingewiesen, dass im Rahmen dieser Erläuterungen die Begriffe Normale und Normalvektor gleichbedeutend verwendet werden. Vorzugsweise sind die Normalvektoren mehrerer, bevorzugt aller dieser Tangentialebenen in radialer Richtung von der Antriebsachse weg orientiert. Insbesondere durch diese Orientierung der Tangentialebene stellt der Drehmomentübertragungsbereich im Vergleich mit einer herkömmlichen Welle-Nabe-Verbindung das Wellenteil dar. Diese Gestaltung des Drehmomentübertragungsbereichs bietet insbesondere die Möglichkeit einer einfachen Fertigung bzw. sind die Antriebskräfte von der Werkzeugmaschine auf die Werkzeugeinrichtung besonders gleichmäßig übertragbar.

In einer weiteren bevorzugten Ausführungsform ist einer der Normalvektoren auf eine dieser Tangentialebenen in radialer Richtung zu der Antriebsachse hin orientiert. Vorzugsweise sind die Normalvektoren mehrerer, bevorzugt aller, dieser Tangentialebenen in radialer Richtung zu der Antriebsachse hin orientiert. Insbesondere durch diese Orientierung der Tangentialebenen stellt der Drehmomentübertragungsbereich im Vergleich mit einer herkömmlichen Welle-Nabe-Verbindung das Nabenteil dar, anders gesprochen stellt sich der Drehmomentübertragungsbereich wenigstens abschnittsweise als Ausnehmung dar. Bei einer derartigen Gestaltung des Drehmomentübertragungsbereichs werden die Kräfte von der Werkzeugmaschine auf die Werkzeugeinrichtung durch innenliegende Fläche (Nabenteil) übertragen, derartige Flächen sind insbesondere gut vor Verschmutzung und Beschädigung geschützt.

In einer bevorzugten Ausführungsform ist zwischen einer dieser Tangentialebenen und dieser Radialebene, wobei diese Radialebene senkrecht zur Antriebsachse angeordnet ist, der Winkel α eingeschlossen. Vorzugsweise ist der Winkel α aus einem bestimmten Bereich ausgewählt, wobei der Winkel α vorzugsweise kleiner ist als 90°, bevorzugt kleiner ist als 80° und besonders bevorzugt kleiner ist als 75°, weiter vorzugsweise ist der Winkel α größer als 0°, bevorzugt größer als 45° und besonders bevorzugt größere als 60°. Weiter vorzugsweise liegt der Winkel α in einem Bereich zwischen 62,5° und 72,5°. Vorzugsweise wird der Winkel α aufgrund der Bauteileigenschaften (insbesondere Geometrie, Wandstärke, E-Modul, Festigkeit und dergleichen) des Drehmomentübertragungsbereichs oder der Werkzeugeinrichtung oder bevorzugt aufgrund der auftretenden Kräfte, in den zuvor genannten Bereichen, gewählt. Insbesondere durch die zuvor beschriebene Auswahl des Winkels α aus dem genannten Bereich ist einerseits ein stabiler Drehmomentübertragungsbereich und andererseits eine gleichmäßige Einleitung der Antriebskräfte in die Werkzeugeinrichtung erreichbar. Es ist in der Regel zu bevorzugen, den Winkel α des Drehmomentübertragungsbereichs kleiner als 70° zu wählen, da dann die Gefahr des Verklemmens geringer ist. Dabei ist der Begriff "Verklemmen" derart aufzufassen, dass die Werkzeugeinrichtung nicht planmäßig aus der Werkzeugmaschine, insbesondere diesem Drehmomentübertragungsbereich, entfernbar ist, also insbesondere nicht ohne zusätzliche Krafteinwirkung. Diesem "Verklemmen" ähnliche Effekte sind in der Mechanik insbesondere als Selbsthemmung bekannt. Vorteilhaft führt ein aus dem genannten Bereich (α >= 70°) gewählter Winkel zu einem besonders geringen Bauraumbedarf. Weiter vorteilhaft kann durch kleinere Winkel α (α < 70°) diese Neigung zum Verklemmen der Werkzeugeinrichtung in diesem Drehmomentübertragungsbereich verringert werden. Als besonders bevorzugter Bereich für den Winkel α hat sich der Bereich um 60° (+/-5°) gezeigt, da hierdurch ein relativ geringer Bauraumbedarf erreichbar ist und ein ungewolltes Verklemmen der Werkzeugeinrichtung vollständig vermieden oder wenigstens verringert werden kann.

In einer bevorzugten Ausführungsform ist zwischen einer dieser Tangentialebenen und dieser Axialebene, wobei in dieser Axialebene die Antriebsachse liegt, der Winkel β eingeschlossen. Vorzugsweise ist der Winkel β aus einem bestimmten Bereich ausgewählt, wobei der Winkel β vorzugsweise kleiner ist als 90°, bevorzugt kleiner ist als 70° und besonders bevorzugt kleiner ist als 65° und weiter vorzugsweise ist der Winkel β größer als 0°, bevorzugt größer als 15° und besonders bevorzugt größer als 30°. Weiter vorzugsweise ist der Winkel β im Wesentlichen 30°, 45° oder 60°. Weiter vorzugsweise weicht der Winkel β nur geringfügig von einem der zuvor genannten drei Winkelwerte ab, wobei unter geringfügig vorzugsweise ein Bereich von vorzugsweise +/- 7,5°, vorzugsweise +/- 5° und besonders bevorzugt von +/- 2,5° zu verstehen ist. Insbesondere durch die beschriebene Wahl des Winkels β aus dem genannten Bereich ist ein besonders stabiler Drehmomentübertragungsbereich und damit eine gleichmäßige Drehmomenteinleitung von der Werkzeugmaschine in die Werkzeugeinrichtung erreichbar. Das übertragbare Drehmoment steigt insbesondere mit abnehmenden Winkel β, vorzugsweise wird der Winkel β, insbesondere für Auslegungen bei welchen ein hohes übertragbares Drehmoment im Vordergrund steht, aus einem Bereich gewählt für den gilt 0° < β < 30°. Der Bauraumbedarf nimmt insbesondere mit steigendem Winkel β ab, vorzugsweise wird der Winkel β, insbesondere bei Auslegungen für welche ein geringer Bauraumbedarf im Vordergrund steht, aus einem Bereich gewählt für den gilt 60° < β < 90°. In einer besonders bevorzugten Ausführungsform, bei welcher insbesondere ein großes Drehmoment übertragbar ist und ein geringer Bauraumbedarf entsteht, beträgt der Winkel β im Wesentlichen 60°.

In einer bevorzugten Ausführungsform weist der Drehmomentübertragungsbereich eine gerade Anzahl von Abtriebsflächenbereichen auf. Vorzugsweise weist der Drehmomentübertragungsbereich 4 oder mehr, bevorzugt 8 oder mehr und besonders bevorzugt 16 oder mehr Abtriebsflächenbereiche auf. Weiter vorzugsweise weist der Drehmomentübertragungsbereich 64 oder weniger, bevorzugt 48 oder weniger und besonders bevorzugt 32 oder weniger Abtriebsflächenbereiche auf. Weiter vorzugsweise weist der Drehmomentübertragungsbereich eine ungerade Anzahl an Abtriebsflächenbereichen auf. Vorzugsweise ist die Anzahl der Abtriebsflächenbereiche von der Größe des Drehmomentübertragungsbereichs abhängig. Weiter vorzugsweise können große Drehmomentübertragungsbereiche auch größere Anzahlen von Abtriebsflächenbereichen aufweisen als die hier angegebenen. Dabei ist unter einem großen Drehmomentübertragungsbereich insbesondere eine Drehmomentübertragungsbereich zu verstehen, bei welcher im Wesentlichen einen Durchmesser von mehr als 50 mm oder mehr aufweist. Insbesondere durch die gerade Anzahl von Abtriebsflächenbereichen können die Antriebskräfte von der Werkzeugmaschine paarweise auf die Werkzeugeinrichtung übertragen werden. Dabei hat sich gezeigt, dass insbesondere durch diese paarweise Einleitung der Antriebskräfte in die Werkzeugeinrichtung ein besonders langlebiger und damit verbesserter Drehmomentübertragungsbereich erreichbar ist.

In einer bevorzugten Ausführungsform sind die Abtriebsflächenbereiche im Wesentlichen sternartig angeordnet. Vorzugsweise sind die Abtriebsflächenbereiche im Wesentlichen sternartig um die Antriebsachse angeordnet. Weiter vorzugsweise wird durch die Abtriebsflächenbereiche ein dreidimensionaler Körper beschrieben, welcher geschnitten mit einer zur Antriebsachse orthogonalen Ebene die Grundfläche eines sternförmigen Polygons aufweist.

Unter dem Begriff Polygon wird im Sinne der vorliegenden Erfindung nicht nur die mathematisch exakte Form mit recht- stumpf- oder spitzwinkeligen Ecken verstanden, sondern auch eine Form, bei der die Ecken abgerundet sind.

Vorzugsweise ist dieses sternförmige Polygon rotationssymmetrisch. Weiter vorzugsweise erscheinen diese sternartig angeordneten Abtriebsflächenbereiche ähnlich einer Zahnwelle einer herkömmlichen Welle-Nabe-Verbindung, wobei diese Welle durch die doppelte Neigung der Abtriebsflächenbereiche eine kegelige Grundform aufweist. Insbesondere durch die sternförmige Anordnung dieser Abtriebsflächenbereiche ist es ermöglicht, eine Vielzahl von Abtriebsflächenbereichen auf kleinem Bauraum anzuordnen und so große Antriebskräfte von der Werkzeugmaschine sicher auf die Werkzeugeinrichtung zu übertragen.

In einer bevorzugten Ausführungsform weist eine Werkzeugmaschine einen Kodierungsabschnitt beziehungsweise ein Kodierungselement auf. Vorzugsweise weist ein derartiger Kodierungsabschnitt eine Querschnittsfläche auf, bevorzugt ist die Querschnittsfläche in einer Ebene angeordnet, welche im Wesentlichen orthogonal zu dieser Antriebsachse ist. Vorzugsweise weist dieses Kodierungselement eine axiale Erstreckung im Wesentlichen orthogonal zu dieser Querschnittsfläche und damit insbesondere parallel zu dieser Antriebsachse auf. Insbesondere durch diese axiale Erstreckung und deren Ausrichtung ist es ermöglicht, dass eine Kodierungseinrichtung einer Werkzeugeinrichtung besonders gut mit diesem Kodierungsabschnitt zusammenwirkt und dadurch ist ein besonders sicheres Aufnehmen der Werkzeugeinrichtung an der Werkzeugmaschine ermöglicht.

In einer bevorzugten Ausführungsform ist einer dieser Kodierungsabschnitte rotationssymmetrisch zu dieser Antriebsachse und somit insbesondere auch zu dieser Werkzeug-Drehachse angeordnet. Vorzugsweise sind mehrere dieser Kodierungsabschnitte rotationssymmetrisch zu dieser Antriebsachse angeordnet. Vorzugsweise sind diese Kodierungsabschnitt um fest vorgegebene Winkelinkremente um die Antriebsachse versetzt. Bevorzugt weist ein Winkelinkrement die Größe von 1 °, 2,5°, 10°, 15°, 22,5°, 30° oder 45° auf, weiter vorzugsweise ergibt ein ganzzahliges vielfaches eines solchen Winkelinkrements einen Vollkreis von 360°. Insbesondere durch diese Verteilung der Kodierungsabschnitte ist es ermöglicht, die Werkzeugeinrichtung gemäß der vorliegenden Winkelinkremente um die Antriebsachse zu versetzten und wieder sicher aufzunehmen, wobei dadurch ein besonders sicheres Aufnehmen der Werkzeugeinrichtung und insbesondere auch ein schnelles Einsetzten der Werkzeugeinrichtung in die Werkzeugmaschine ermöglicht ist.

In einer bevorzugten Ausführungsform, ist der Kodierungsabschnitt, insbesondere die Querschnittsfläche des Kodierungsabschnitts, aus einer bestimmten Gruppe von geometrischen Formen ausgewählt. Dabei umfasst diese Gruppe vorzugsweise:
- ein Polygon mit einer Vielzahl von Ecken, bevorzugt 3, 4, 5, 6, 7, 8, 9, 10 oder mehr,
- einen Kreis,
- eine Ellipse,
- einen Spline,
- eine Grundform mit mehreren Geraden, welche mittels Bögen miteinander verbunden sind
oder eine Kombination aus mehreren der zuvor genannten Elemente.

Insbesondere weist der Kodierungsabschnitt der Werkzeugmaschine die gegengleiche Form zu einer Kodierungseinrichtung an der Werkzeugeinrichtung auf um vorzugsweise mit dieser Zusammenzuwirken.

Ein Werkzeugmaschinensystem weist eine erfindungsgemäße Werkzeugmaschine und wenigstens eine Werkzeugeinrichtung zur Verwendung mit dieser Werkzeugmaschine auf. Dabei weist die Halteeinrichtung wenigstens eine Wirkfläche zum Übertragen einer Kraftwirkung auf die Werkzeugeinrichtung auf. Diese Wirkfläche ist vorzugsweise auf der der Werkzeugmaschine zugewandten Seite der Halteeinrichtung angeordnet. Weiter vorzugsweise weist die Halteeinrichtung eine Halteeinrichtungs-Begrenzungsfläche auf. Diese Halteeinrichtung-Begrenzungsfläche ist auf der von der Werkzeugmaschine abgewandten Seite der Halteeinrichtung angeordnet. Vorzugsweise ist die Wirkfläche der Halteeinrichtung dazu eingerichtet eine Haltekraft auf die Werkzeugeinrichtung zu übertragen. Bevorzugt ist die Halteeinrichtungs-Begrenzungsfläche im Wesentlichen gegenüberliegend zu dieser Wirkfläche angeordnet.

Die Werkzeugeinrichtung weist einen Werkzeuganschlussbereich und eine Werkzeug-Drehachse auf. Dabei weist dieser Werkzeuganschlussbereich wenigstens eine Seitenwandung auf. Dieser Werkzeuganschlussbereich erstreckt sich in axialer Richtung zwischen einer ersten und einer zweiten Orthogonalebene, wenigstens eine Komponente der Erstreckung des Werkzeuganschlussbereichs weist in Richtung der Werkzeug-Drehachse. Dabei ist eine solche Orthogonalebene insbesondere orthogonal zur Werkzeug-Drehachse angeordnet. Weiter vorzugsweise ist diese Seitenwandung radial beanstandet zu dieser Werkzeug-Drehachse und weist eine axiale Erstreckung in Richtung der Werkzeug-Drehachse auf. Weiter vorzugsweise verläuft diese Seitenwandung radial geschlossen oder bevorzugt unterbrochen oder mit Ausnehmungen um diese Werkzeug-Drehachse.

Durch diese Halteeinrichtung wird auf die Werkzeugeinrichtung, wenn diese in der Werkzeugmaschine aufgenommen ist, im Bereich der Wirkfläche dieser Halteeinrichtung eine Kraftwirkung ausgeübt, insbesondere eine Haltekraftwirkung welche die Werkzeugeinrichtung an der Werkzeugmaschine hält. Diese Kraftwirkung, insbesondere Haltekraftwirkung, weist wenigstens eine Komponente in Richtung der Werkzeug-Drehachse auf, vorzugsweise ist die Kraftwirkung im Wesentlichen parallel zu dieser.

In einer bevorzugten Ausführungsform sind die Halteeinrichtungs-Begrenzungsfläche und die Wirkfläche der Halteeinrichtung zwischen der ersten und der zweiten Orthogonalebene dieses Werkzeug-Anschlussbereichs angeordnet, wenn die Werkzeugeinrichtung an der Werkzeugmaschine aufgenommen ist. Weiter vorzugsweise sind die Halteeinrichtung-Begrenzungsfläche und die Wirkfläche der Halteeinrichtung in axialer Richtung im Bereich der axialen Erstreckung der Werkzeug-Antriebsflächenbereiche angeordnet, wenn die Werkzeugeinrichtung an der Werkzeugmaschine aufgenommen ist. Vorzugsweise bildet der Werkzeug-Anschlussbereich eine ringförmige Gestalt aus, bevorzug eine konische Gestalt, weiter vorzugsweise ist die Wirkfläche, vorzugsweise einer, bevorzugt aller Halteeinrichtung radial und axial innerhalb dieser Gestalt angeordnet, wenn die Werkzeugeinrichtung an der Werkzeugmaschine aufgenommen ist. Insbesondere durch eine solche Ausgestaltung der Werkzeugeinrichtung und der Werkzeugmaschine ist es ermöglicht, dass die Halteeinrichtung in axialer Richtung nicht über die Werkzeugeinrichtung hinausragt, somit ist ein besonders sicherer Betrieb des Werkzeugmaschinensystems ermöglicht.

In einer bevorzugten Ausführungsform weist die Seitenwandung der Werkzeugeinrichtung Werkzeug-Antriebsflächenbereiche auf. Vorzugsweise erstrecken sich diese Antriebsflächenbereiche in radialer Richtung wenigstens abschnittsweise zwischen einem ersten und einem zweiten radialen Abstand zu dieser Werkzeug-Drehachse. Weiter vorzugsweise ist wenigstens eine dieser Abschnitte zur Drehmomentübertragung bzw. zur Antriebskraftübertragung von der Werkzeugmaschine auf die Werkzeugeinrichtung eingerichtet. Weiter vorzugsweise weist der Drehmomentübertragungsbereich der Werkzeugmaschine wenigstens abschnittsweise den geometrisch konjugierten Verlauf zu diesen Werkzeug-Antriebsflächenbereichen auf. Insbesondere durch diese radialen Erstreckungen der Werkzeug-Antriebsflächenbereiche ist eine formschlüssige Antriebskraftübertragung und damit eine besonders sichere Form der Antriebskraftübertragung von der Werkzeugmaschine auf die Werkzeugeinrichtung ermöglicht.

Die nachfolgenden Figuren zeigen verschiedene Merkmale und Ausführungsformen der Erfindung und sind teilweise schematisiert, wobei auch eine Kombination einzelner Merkmale und Ausführungsformen über die Figuren hinaus möglich ist.

**Dabei zeigt**
- Fig. 1: eine teilweise schematisierte Darstellung einer Werkzeugaufnahmeeinrichtung einer handgeführten Werkzeugmaschine,
- Fig. 2: zwei Schnittdarstellungen (Fig. 2a geschlossene Stellung; Fig. 2b offene Stellung) einer Werkzeugaufnahmeeinrichtung,
- Fig. 3: zwei weitere Schnittdarstellungen einer Ausführungsform der Werkzeugaufnahmeeinrichtung,
- Fig. 4: zwei Schnittdarstellungen einer weiteren Ausführungsform der Werkzeugaufnahmeeinrichtung in offener und geschlossener Stellung sowie eine detaillierte Ansicht der Sperreinrichtung,
- Fig. 5: zwei schematisierte Darstellungen einer Werkzeugaufnahmeeinrichtung,
- Fig. 6: einen Drehmomentübertragungsbereich mit zwei Abtriebsflächenbereichen,
- Fig. 7: einen Drehmomentübertragungsbereich mit Abtriebsflächenbereichen, welche sich zwischen Begrenzungsebenen erstrecken,
- Fig. 8: einen Drehmomentübertragungsbereich mit zwei Abtriebsflächenbereichen, welche aneinanderstoßend angeordnet sind,
- Fig. 9: einen Drehmomentübertragungsbereich und die Neigung im Wesentlichen des Abtriebsflächenbereichs (Tangentialebene) um den Winkel β,
- Fig. 10: einen Drehmomentübertragungsbereich und die Neigung im Wesentlichen des Abtriebsflächenbereichs (Tangentialebene) um den Winkel α,
- Fig. 11: einen Drehmomentübertragungsbereich mit sternförmiger Anordnung der Abtriebsflächenbereiche um die Antriebsachse,
- Fig. 12: eine Draufsicht (Fig. 12a) und eine Seitenansicht (Fig. 12b) einer Ausführungsform eines Drehmomentübertragungsbereichs mit sternförmiger Anordnung der Abtriebsflächenbereiche,
- Fig. 13: zwei Schnittdarstellungen von Drehmomentübertragungsbereichen mit unterschiedlichen Ausführungsformen der Kodierungseinrichtungen,
- Fig. 14: eine Teilschnittdarstellung einer Ausführungsform eines Werkzeugmaschinensystems,
- Fig. 15: eine Draufsicht auf einen Teilbereich einer Ausführungsform der Werkzeugeinrichtung mit Werkzeug-Seitenwandung,
- Fig. 16: perspektivische Darstellungen verschiedene Berührbereiche (Fig. 16a, Punktberührung; Fig. 16b, Linienberührung; Fig. 16c, Flächenberührung) zwischen den Abtriebsflächenbereichen des Drehmomentübertragungsbereichs und den Werkzeug-Antriebsflächenbereichen,
- Fig. 17: perspektivische Darstellungen unterschiedlich gekrümmte Abtriebsflächenbereiche,
- Fig. 18: eine Seitenansicht einer Werkzeugmaschine mit einer Werkzeugeinrichtung.

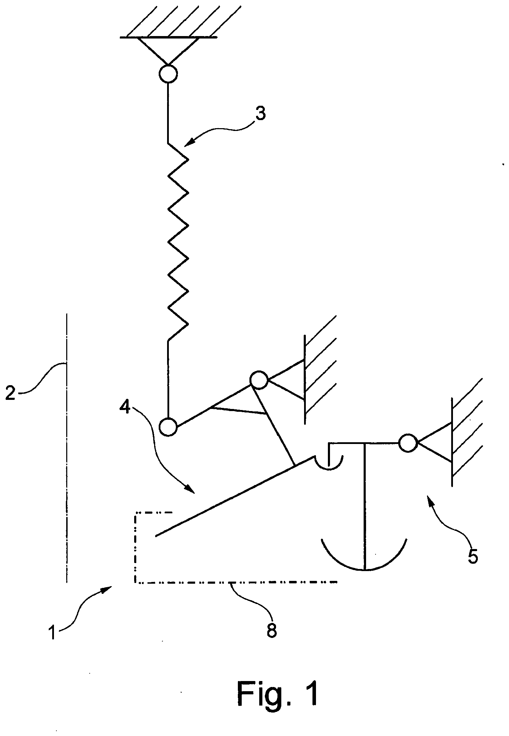

Figur 1 zeigt eine schematisierte Darstellung einer Werkzeugaufnahmeeinrichtung 1 für eine handgeführte Werkzeugmaschine. Mit dieser Werkzeugaufnahmeeinrichtung 1 kann eine Werkzeugeinrichtung 8 an der Werkzeugmaschine aufgenommen werden, dabei fallen eine Werkzeug-Drehachse und eine Antriebsachse 2 der Werkzeugmaschine im Wesentlichen zusammen. Die Werkzeugaufnahmeeinrichtung 1 ist so gestaltet, dass beim Aufnehmen der Werkzeugeinrichtung 8 durch diese eine Sperreinrichtung 5 betätigt wird. Diese Sperreinrichtung 5 ist dazu vorgesehen, eine Halteeinrichtung 4 in einer geöffneten Position zu halten. Diese Halteeinrichtung 4 wird in der geöffneten Position mittels einer Spanneinrichtung 3 in Richtung einer geschlossenen Position belastet. In dieser geschlossenen Position ist die Werkzeugeinrichtung 8 an der Werkzeugmaschine aufgenommen und wird durch die Halteeinrichtung 4 an dieser gehalten. Wird die Werkzeugeinrichtung 8 aus der Werkzeugaufnahmevorrichtung 1 entfernt, so hält die Sperreinrichtung 5 die Halteeinrichtung 4 wieder in der geöffneten Position und gibt diese erst wieder in Richtung der geschlossenen Position frei, wenn die Sperreinrichtung 5 mittels der Werkzeugeinrichtung 8 betätigt wird. Durch eine derartige Werkzeugaufnahmeeinrichtung 1 ist einerseits ein werkzeugloser Wechsel der Werkzeugeinrichtung 8, wie dieser bei handgeführten Werkzeugmaschinen häufig vorkommt, ermöglicht, andererseits ist dieser Werkzeugwechsel besonders einfach zu bewerkstelligen.

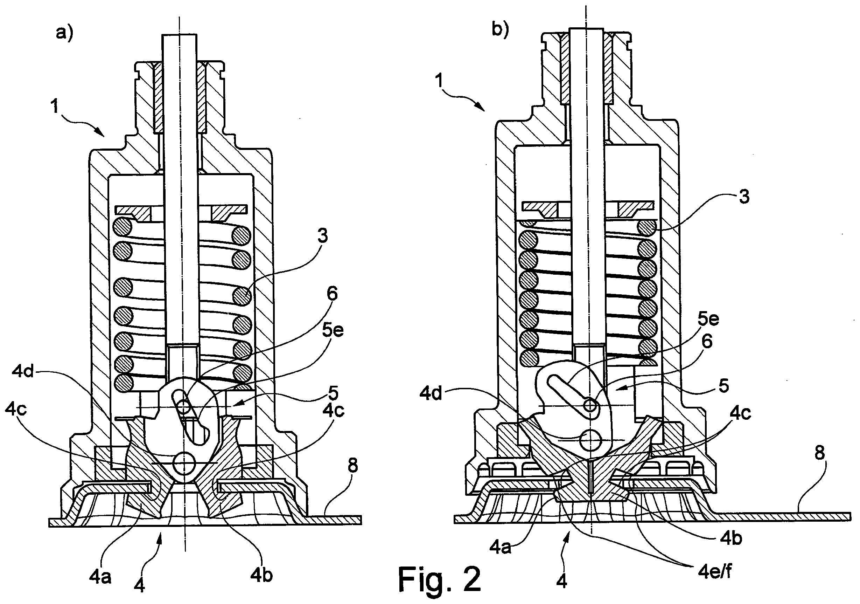

Figur 2 zeigt zwei Schnittdarstellungen einer Werkzeugaufnahmeeinrichtung 1 (Fig. 2a geschlossene Stellung, Fig. 2b offene Stellung). Dabei bedeutet die geschlossene Stellung, Figur 2a, der Werkzeugaufnahme 1, dass die Halteeinrichtung 4 geschlossen ist und die Werkzeugeinrichtung 8 an der Werkzeugaufnahmeeinrichtung aufgenommen ist. Die offene Stellung, Figur 2b, dass die Halteeinrichtung 4 geöffnet ist und die Werkzeugeinrichtung 8 in die Werkzeugaufnahmeeinrichtung eingesetzt werden oder aus dieser entnommen werden kann. Die Werkzeugaufnahmeeinrichtung 1 weist eine Spanneinrichtung 3, eine Halteeinrichtung 4 und eine Sperreinrichtung 5 auf. Die Halteeinrichtung 4 weist zwei gegenläufig bewegbare Hakeneinrichtungen 4a/b auf. Die Hakeneinrichtungen 4a/b sind um einen gemeinsamen Drehpunkt 4d drehbar in der Werkzeugaufnahmevorrichtung gelagert. Zum Halten der Werkzeugeinrichtung 8 weisen die Hakeneinrichtungen 4a/b jeweils Halteflächen 4c auf. Die Sperreinrichtung 5 weist eine kulissenartige Führungsausnehmung 5e auf, weiter ist die Sperreinrichtung 5 einstückig mit der ersten Hakeneinrichtung 4a ausgebildet. In die Führungsausnehmung 5e greift ein Bewegungselement 6 ein und verbindet die Hakeneinrichtung 4a/b mittels der Sperreinrichtung 5 mit der Spanneinrichtung 3. Durch die Spanneinrichtung wird die Halteeinrichtung 4 in der geschlossenen Stellung gehalten. In der offenen Stellung, Figur 2b, stützt sich das Bewegungselement 6 in der Führungsausnehmung 5e ab. Beim Einsetzten der Werkzeugeinrichtung 8 in die Werkzeugaufnahmeeinrichtung 1 kontaktiert die Werkzeugeinrichtung die Hakeneinrichtungen 4a/b im Bereich der Betätigungsbereiche 4e/f. Durch dieses Kontaktieren der Werkzeugeinrichtung 8 mit den Hakeneinrichtungen 4a/b wird ein Drehmoment auf diese in Richtung auf die geschlossenen Position dieser ausgeübt und bei entsprechender Größe dieses Drehmoments der Schließvorgang der Werkzeugaufnahmeeinrichtung eingeleitet. Durch zwei gegenläufig bewegbare Hakeneinrichtungen 4a/b und ein in einer Führungsausnehmung 5e bewegbares Bewegungselement 6 ist eine besonders einfache und sichere Werkzeugaufnahmeeinrichtung mit wenigen Bauteilen erreichbar.

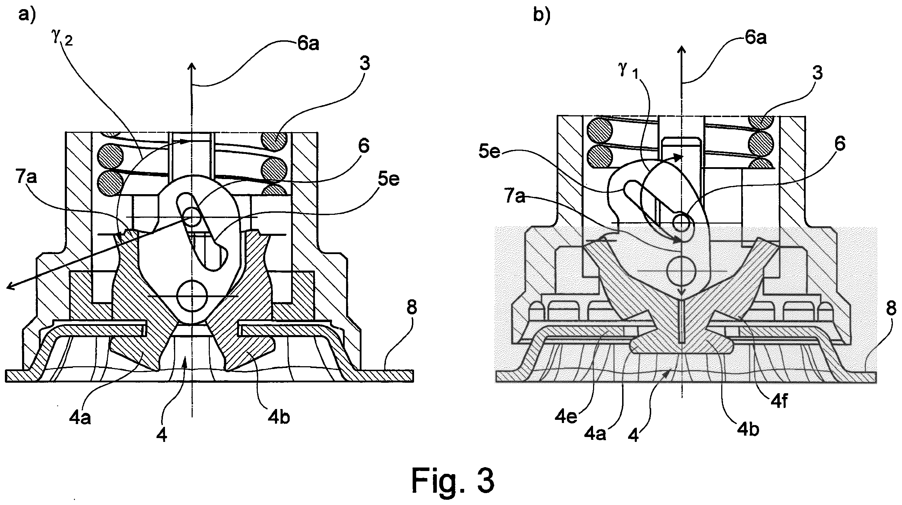

Figur 3 zeigt zwei detaillierte Schnittdarstellungen eines Ausschnitts der in Figur 2 dargestellten Werkzeugaufnahmeeinrichtung 1, einmal in einer geschlossenen (Figur 3a) und einmal in einer offenen (Figur 3b) Stellung. Das Bewegungselement 6 bewegt sich aufgrund der von der Spanneinrichtung 3 aufgebrachten Kraftwirkung in seiner Bewegungsrichtung 6a. Die Führungsausnehmung 5e ist so gestaltet, dass eine Normale auf die Kontaktfläche 7a, der Führungsausnehmung 5e mit dem Bewegungselement 6, in der geschlossenen Stellung (Figur 3a), mit der Bewegungsrichtung 6a einen Winkel γ₂ einschließt. In der geöffneten Stellung (Figur 3b) schließt die Normale auf die Kontaktfläche 7a, der Führungsausnehmung 5e mit dem Bewegungselement 6, mit der Bewegungsrichtung 6a einen Winkel γ₁ ein. Der Winkel γ₂ ist so gewählt, dass dieser nahe 110° (vorzugsweise in einem Bereich von 108°-112°) liegt, somit stellt sich eine Kraftverstärkung in Bezug auf die Hakeneinrichtungen 4a/b ein, wobei eine Kraftverstärkung zu einer großen Haltekraft der Halteeinrichtung 4 führt. Der Winkel γ₁ ist so gewählt, dass dieser im Wesentlichen 180° entspricht, dadurch werden die Hakeneinrichtungen 4a/b in der offenen Stellung gehalten. Aus dieser offenen Stellung (Figur 3b) wird die Halteeinrichtung erst bewegt, wenn mittels der Werkzeugeinrichtung 8 ein Drehmoment auf die Hakeneinrichtungen 4a/b über die Betätigungsbereiche 4e/f ausgeübt wird. Die Größe der Winkel γ₁ und γ₂ kann, bei gegebener Bewegungsrichtung des Bewegungselements 6, durch den Verlauf der Führungsausnehmung 5e bestimmt werden. Durch die dargestellte Wahl der Winkel γ₁ und γ₂ kann einerseits ein sicheres Verbleiben der Hakeneinrichtungen 4a/b in der offenen Stellung und andererseits eine besonders hohe Haltekraft, welche diese Hakeneinrichtungen 4a/b auf die Werkzeugeinrichtung 8 ausüben, erreicht werden und damit ist eine besonders zuverlässige Werkzeugaufnahmeeinrichtung erreichbar.

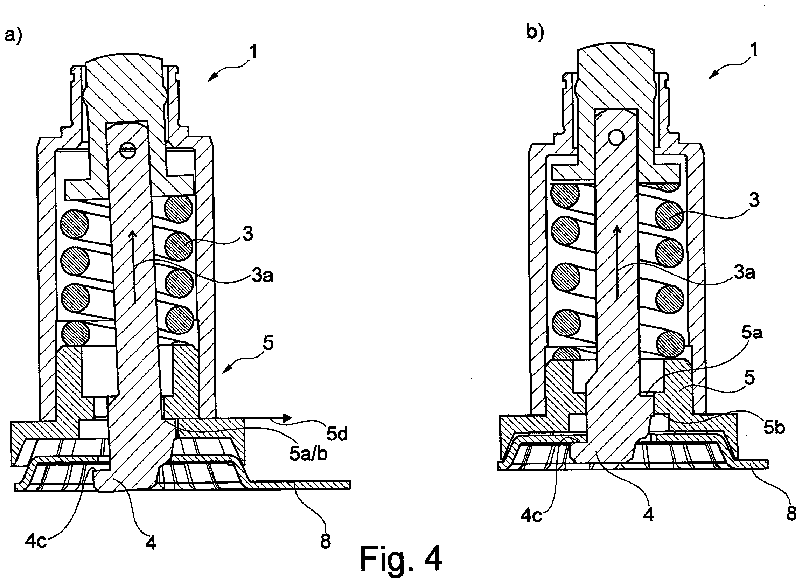

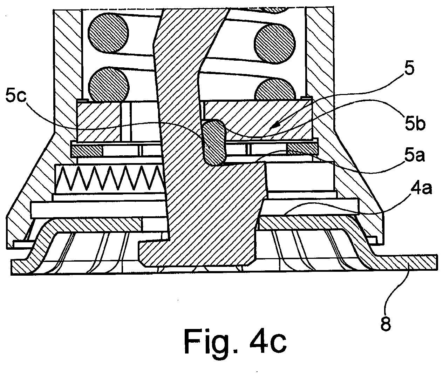

Figur 4 zeigt eine Werkzeugaufnahmeeinrichtung 1 in einer offenen und einer geschlossenen Stellung, sowie eine detaillierte Ansicht der Sperreinrichtung. Die Werkzeugaufnahmeeinrichtung 1 weist eine einfache Sperreinrichtung 5, eine Spanneinrichtung 3 und eine Halteeinrichtung 4 auf. Dabei zeigt Figur 4a die Werkzeugaufnahmeeinrichtung 1 in einer offenen Stellung, Figur 4b in einer geschlossenen Stellung und Figur 4c eine detaillierte Ansicht einer Sperreinrichtung mit mittelbarer Kontaktierung der Sperrflächenabschnitte 5a/b. Die Halteeinrichtung 4 wird durch die Spanneinrichtung 3 mit der Spannkraft 3a beaufschlagt und in Richtung der geschlossenen Stellung gezogen. In der offenen Stellung (Fig. 4a) kontaktiert der erste Sperrflächenabschnitt 5a den zweiten Sperrflächenabschnitt 5b aufgrund der Spannkraft 3a in Zusammenhang mit einer wirksamen Reibungszahl zwischen diesen beiden Abschnitten 5a/b ergibt sich ein Sperrkraftpotential 5d. Mittels der Werkzeugeinrichtung 8 kann auf die Halteeinrichtung eine Kraftwirkung entgegen dem Sperrkraftpotential 5d aufgebracht werden. Erst wenn diese von der Werkzeugeinrichtung 8 ausgehende Kraftwirkung größer ist als das Sperrkraftpotential 5d, bewegt sich die Halteeinrichtung in Richtung der geschlossenen Stellung (Fig.4b). In der geschlossenen Stellung (Fig.4b) wird die Werkzeugeinrichtung 8 durch die Halteeinrichtung 4 in der Werkzeugaufnahmeeinrichtung 1 dadurch gehalten, dass die Spannkraft 3a an der Haltefläche 4c auf die Werkzeugeinrichtung 8 übertragen wird. Figur 4c zeigt eine Sperreinrichtung 5, bei welcher sich der erste Sperrflächenabschnitt 5a und der zweite Sperrflächenabschnitt 5b mittels eines Zwischenelements 5c kontaktieren. Zum Überführen der Werkzeugaufnahmeeinrichtung 1 von der offenen Stellung, in der diese in Fig.4c dargestellt ist, in eine geschlossenen Stellung wird durch die Werkzeugeinrichtung 8 im Betätigungsbereich 4a eine Kraftwirkung aufgebracht. Bei Überschreiten eines Schwellenwertes bewegt sich die Halteeinrichtung in Richtung der geschlossenen Stellung (nicht dargestellt).

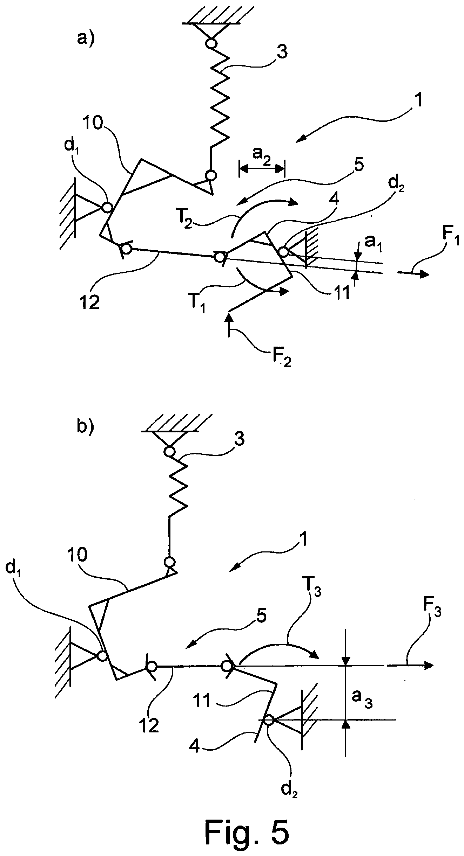

Figur 5 zeigt zwei schematisierte Darstellungen einer Werkzeugaufnahmeeinrichtung, Fig.5b in geschlossener Stellung und in offener Stellung Fig.5a. Die Werkzeugaufnahmeeinrichtung 1 weist eine Spanneinrichtung 3 eine Halteeinrichtung 4 und eine Sperreinrichtung 5 auf. Die Sperreinrichtung 5 weist ein erstes Hebelelement 10, ein zweites Hebelelement 11 und ein Verbindungselement 12 auf. Dabei steht das erste Hebelelement 10 mittels des Verbindungselements 12 mit dem zweiten Hebelelement 11 in Verbindung. Das erste Hebelelement 10 wird mittels der Spanneinrichtung 3 in die geschlossene Stellung mit einer Spannkraft beaufschlagt und ist um einen Drehpunkt d1 drehbar gelagert. Das zweite Hebelelement 11 ist um einen zweiten Drehpunkt d2 drehbar gelagert. In der offenen Stellung (Fig.5a) übt das erste Hebelelement 10 über das Verbindungselement 12 eine Kraftwirkung F1 auf das zweite Hebelelement 11 aus. Diese Kraftwirkung ist um den Abstand a1 vom Drehpunkt d2 beabstandet und ruft damit ein Drehmoment T1 auf das zweite Hebelelement 11 hervor. Wird eine Werkzeugeinrichtung (nicht dargestellt) in die Werkzeugaufnahmeeinrichtung 1 eingesetzt, so wird auf das zweite Hebelelement 11 eine Kraftwirkung F2 durch die Werkzeugeinrichtung (nicht dargestellt) mittelbar oder unmittelbar hervorgerufen. Diese Kraftwirkung F2 ist um den Abstand a2 vom Drehpunkt d2 beabstandet und ruft ein Drehmoment T2 auf das zweite Hebelelement 11 hervor. Übersteigt das Drehmoment T2 der Größe nach das Drehmoment T1, so bewegt sich das zweite Hebelelement 11 in Richtung des Drehmoments T2, die Werkzeugaufnahmeeinrichtung schließt sich. Im geschlossenen Zustand Fig.5b übt das erste Hebelelement 10 mittels des Verbindungselements 12 eine Kraftwirkung F3 auf das zweite Hebelelement 11 aus. Die Kraftwirkung F3 ist um den Abstand a3 von dem Drehpunkt d2 beanstandet und ruft damit ein Drehmoment T3 hervor. In dieser geschlossenen Stellung kann die Werkzeugeinrichtung (nicht dargestellt) mittels einer Halteeinrichtung 4 (nicht dargestellt) in der Werkzeugaufnahmeeinrichtung gehalten werden. Durch die beschriebene Gestaltung der Hebelelemente 10/11 sowie deren Verbindung mit dem Verbindungselement 12 kann die Werkzeugeinrichtung mit einer sogenannten Übertotpunktlage gehalten werden, derartige Mechanismen haben sich als besonders sicher herausgestellt, so dass ein verbesserte Werkzeugaufnahmeeinrichtung 1 erreichbar ist.

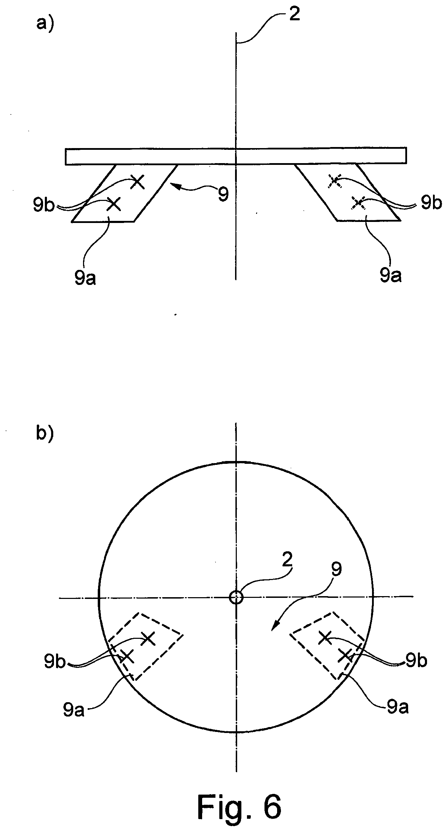

Figur 6 zeigt zwei Ansichten eines Drehmomentübertragungsbereichs 9 einer Werkzeugaufnahmeeinrichtung (Fig.6a Vorderansicht, Fig.6b Draufsicht). Dieser Drehmomentübertragungsbereich 9 weist zwei Abtriebsflächenbereiche 9a auf, welche jeweils mehrere Flächenpunkte 9b aufweisen. Der Drehmomentübertragungsbereich 9 ist dazu eingerichtet, Antriebskräfte von der Werkzeugmaschine (nicht dargestellt) auf eine Werkzeugeinrichtung (nicht dargestellt) zu übertragen. Die Werkzeugmaschine treibt die Werkzeugeinrichtung dreh-oszillierend an, dabei oszilliert die Werkzeugeinrichtung um die Antriebsachse 2.

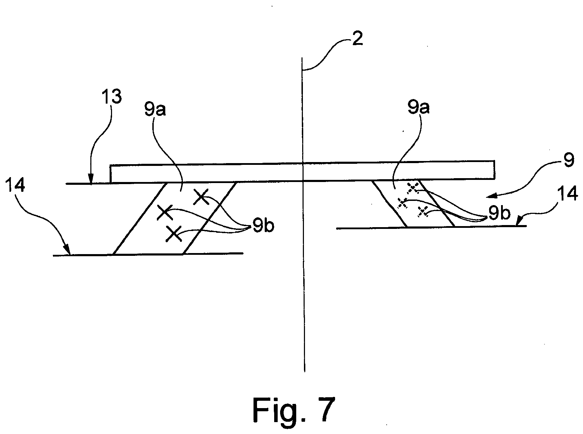

Figur 7 zeigt einen Drehmomentübertragungsbereich 9 einer Werkzeugmaschine, dieser ist dazu eingerichtet Antriebskräfte von der Werkzeugmaschine (nicht dargestellt) auf die Werkzeugeinrichtung (nicht dargestellt) zu übertragen. Der Drehmomentübertragungsbereich 9 weist zwei Abtriebsflächenbereiche 9a auf. Jeder Abtriebsflächenbereich 9a weist mehrere Flächenpunkte 9b auf. Die Abtriebsflächenbereiche 9a erstrecken sich jeweils zwischen einer oberen Begrenzungsebene 13 und einer unteren Begrenzungsebene 14, wobei die oberen Begrenzungsebenen in einer Begrenzungsebene 13 zusammenfallen. Die Begrenzungsebenen 13/14 sind orthogonal zur Antriebsachse 2 angeordnet. Mittels der Werkzeugmaschine (nicht dargestellt) wird die Werkzeugeinrichtung (nicht dargestellt) dreh-oszillierend um die Antriebsachse 2 angetrieben.

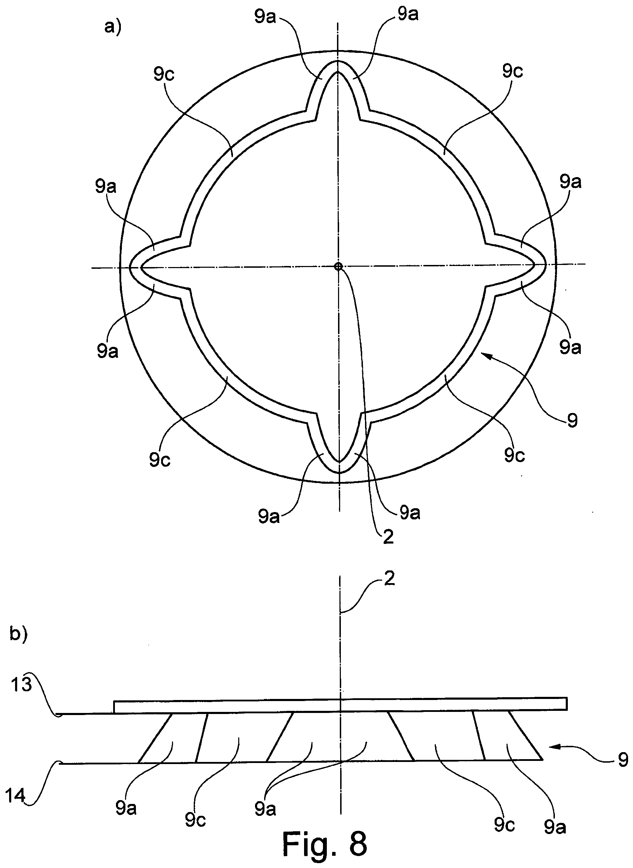

Figur 8 zeigt zwei Ansichten eines Drehmomentübertragungsbereichs 9 einer Werkzeugmaschine (Fig.8a Draufsicht, Fig.8b Vorderansicht). Der Drehmomentübertragungsbereich 9 ist dazu vorgesehen Antriebskräfte von einer Werkzeugmaschine (nicht dargestellt) auf eine Werkzeugeinrichtung (nicht dargestellt) zu übertragen, die Werkzeugeinrichtung wird um die Antriebsachse 2 dreh-oszillierend angetrieben. Jeweils zwei Abtriebsflächenbereiche 9a sind aneinanderstoßend angeordnet und mehrere dieser Abtriebsflächenbereiche 9a sind rotationssymmetrisch um die Antriebsachse 2 angeordnet. Die Abtriebsflächenbereiche 9a erstrecken sich zwischen einer einzigen oberen 13 und einer einzigen unteren 14 Begrenzungsebene. Jeweils zwei Abtriebsflächenbereiche 9a sind mit zwei weiteren Abtriebsflächenbereichen 9a mittels eines Verbindungsbereichs 9c verbunden. Durch die aneinanderstoßende Anordnung der Abtriebsflächenbereiche 9a können sich diese gegeneinander abstützen und es wird ein besonders stabiler Drehmomentübertragungsbereich 9 ermöglicht. Durch die rotationssymmetrische Anordnung der Abtriebsflächenbereiche 9a ist es ermöglicht die Werkzeugeinrichtung in diskreten Schritten um die Antriebsachse zu versetzten, somit ist ein flexibler Einsatz der Werkzeugmaschine (nicht dargestellt) ermöglicht.

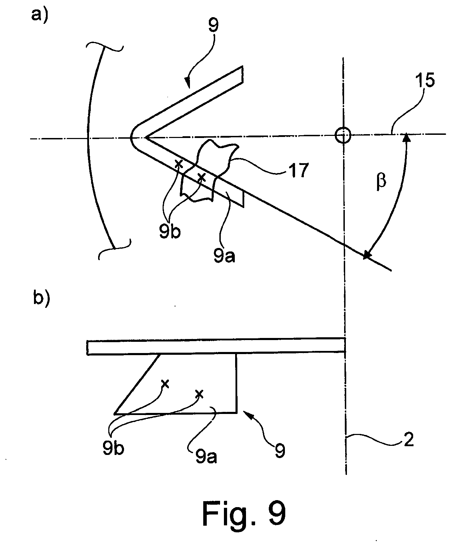

In Figur 9 sind zwei Ansichten eines Ausschnitts eines Drehmomentübertragungsbereichs 9 der Werkzeugmaschine dargestellt (Fig.9a Draufsicht, Fig.9b Vorderansicht). Eine Axialebene 15 schließt die Antriebsachse 2 ein. Eine Tangentialebene 17 tangiert den Abtriebsflächenbereich 9a in einem Flächenpunkt 9b. Die Tangentialebene 17 schließt mit der Axialebene15 den spitzen Winkel β ein.

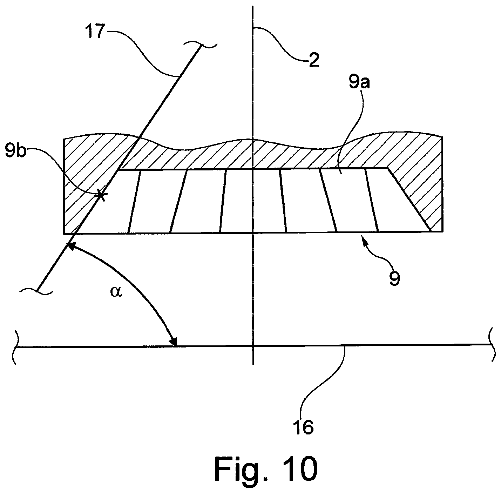

In Figur 10 ist eine Schnittdarstellung eines Drehmomentübertragungsbereichs 9 einer Werkzeugmaschine dargestellt. Der Drehmomentübertragungsbereich 9 weist eine Vielzahl von Abtriebsflächenbereichen 9a auf. Eine Tangentialebene 17 tangiert einen dieser Abtriebsflächenbereiche 9a in einem Flächenpunkt 9b. Orthogonal zur Antriebsdrehachse 2 ist eine Radialebene 16 angeordnet. Die Radialebne 16 schließt mit der Tangentialebene 17 einen spitzen Winkel α ein.

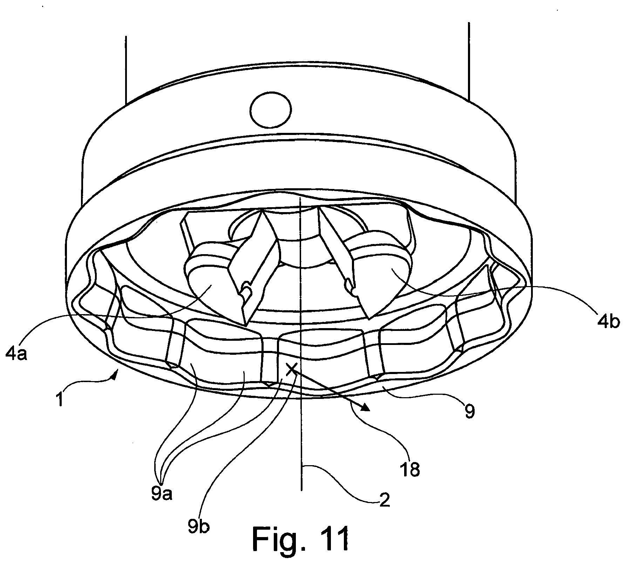

Figur 11 zeigt eine Werkzeugaufnahmeeinrichtung 1 in dreidimensionaler Darstellung. Der Drehmomentübertragungsbereich 9 weist eine Vielzahl von Abtriebsflächenbereichen 9a auf. Diese Abtriebsflächenbereiche sind rotationssymmetrisch, sternförmig um die Antriebsachse 2 angeordnet. Eine Werkzeugeinrichtung (nicht dargestellt) kann mittels der Hakeneinrichtungen 4a/b an der Werkzeugmaschine gehalten werden. Die Abtriebsflächenbereiche 9a sind dabei so angeordnet, dass eine Normale 18 auf einen dieser Abtriebsflächenbereiche 9a in Richtung zu der Antriebsdrehachse 2 weist. Daraus ergibt sich, dass der Drehmomentübertragungsbereich 9 im Wesentlichen als eine Ausnehmung mit einem sternförmigen Profil gestaltet ist. Die Abtriebsflächenbereiche 9a sind aneinanderstoßend angeordnet und laufen geschlossen um die Antriebsdrehachse 2 um. Durch diese Anordnung wird ein besonders stabiler Drehmomentübertragungsbereich 9 ermöglicht, welcher eine gleichmäßige Einleitung der Antriebskräfte von der Werkzeugmaschine (nicht dargestellt) auf die Werkzeugeinrichtung (nicht dargestellt) erlaubt.

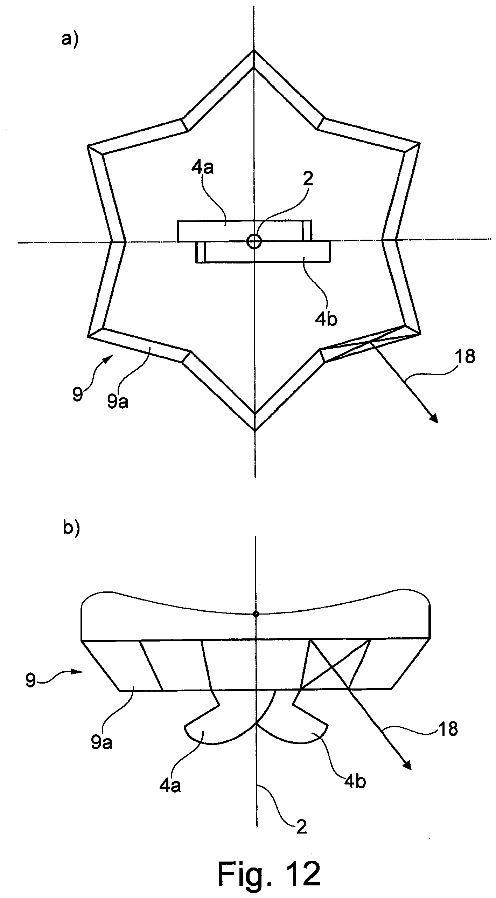

Figur 12 zeigt einen Drehmomentübertragungsbereich 9 einer Werkzeugaufnahmeeinrichtung einer handgeführten Werkzeugmaschine, dabei ist in Fig.12a eine Draufsicht und in Fig.12b eine Vorderansicht dieser Werkzeugaufnahmeeinrichtung dargestellt. Eine Werkzeugeinrichtung (nicht dargestellt) kann mittels der Hakeneinrichtungen 4a/b an einem Drehmomentübertragungsbereich 9 gehalten werden. Die Hakeneinrichtungen 4a/b sind hierzu gegenläufig bewegbar und von der Werkzeugeinrichtung betätigbar. Der Drehmomentübertragungsbereich 9 weist eine Vielzahl von Abtriebsflächenbereichen 9a auf, diese sind radial geschlossen umlaufend um die Antriebsachse 2 und sternförmig angeordnet. Eine Normale 18 auf einen dieser Abtriebsflächenbereiche 9a ist von der Antriebsachse 2 weg orientiert. Durch eine derartige Anordnung der Abtriebsflächenbereiche 9a ist eine besonders einfache Werkzeugaufnahmeeinrichtung erreichbar.

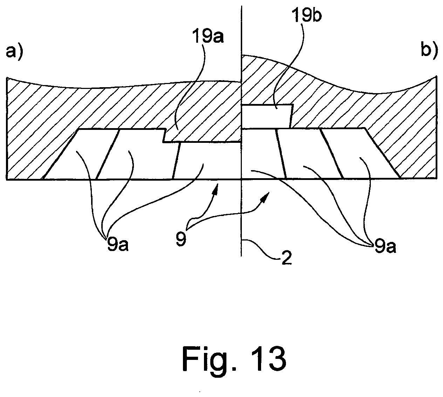

Figur 13 zeigt zwei Teilschnittdarstellungen von Drehmomentübertragungsbereichen 9 einer Werkzeugaufnahmeeinrichtung einer handgeführten Werkzeugmaschine, dabei sind in Fig.13 verschiedene Kodierungseinrichtungen 19 dargestellt. Fig.13a zeigt einen Drehmomentübertragungsbereich 9 mit einer Vielzahl von Abtriebsflächenbereichen 9a. Die Abtriebsflächenbereiche 9a sind sternförmig um die Antriebsachse 2 angeordnet und radial beabstandet zu dieser. Im Bereich der Antriebsachse 2 ist eine Kodierungseinrichtung 19a als erhabener Abschnitt angeordnet, dabei ist diese Kodierungseinrichtung 19a dazu eingerichtet in eine Ausnehmung in der Werkzeugeinrichtung (nicht dargestellt) einzugreifen. Die Kodierungseinrichtung 19a ist kreisrund und rotationssymmetrisch zur Antriebsachse 2 angeordnet. Fig.13b zeigt einen Drehmomentübertragungsbereich 9 mit einer Vielzahl von Abtriebsflächenbereichen 9a. Die Abtriebsflächenbereiche 9a sind sternförmig um die Antriebsachse 2 angeordnet und radial beabstandet zu dieser. Im Bereich der Abtriebsachse 2 ist eine Kodierungseinrichtung 19b als eine Ausnehmung angeordnet, dabei ist diese Kodierungseinrichtung 19b dazu eingerichtet, dass ein erhabener Abschnitt an einer Werkzeugeinrichtung (nicht dargestellt) in diese eingreift.

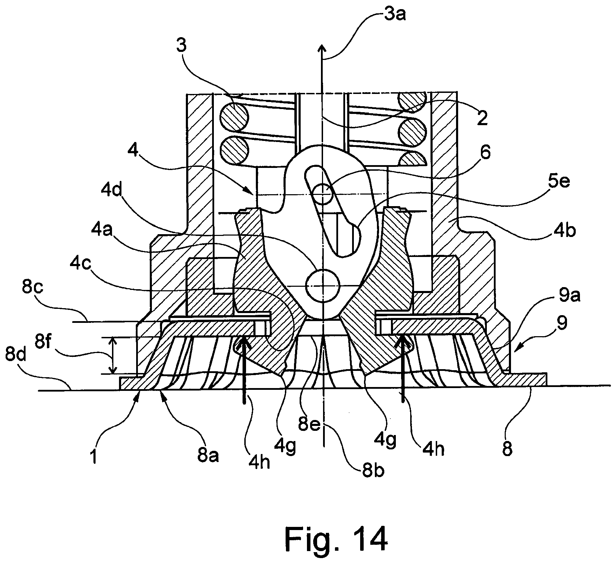

Figur 14 zeigt ein Werkzeugmaschinensystem mit einer Werkzeugaufnahmeeinrichtung 1 und einer Werkzeugeinrichtung 8. Die Werkzeugeinrichtung 8 ist so an der Werkzeugaufnahmeeinrichtung 1 aufgenommen, dass die Antriebsdrehachse 2 und die Werkzeugeinrichtungs-Drehachse 8b zusammenfallen. Die Werkzeugeinrichtung 8 weist einen Werkzeuganschlussbereich 8a auf, dieser erstreckt sich zwischen einer ersten 8c und einer zweiten 8d Orthogonalebene. Der Werkzeug-Antriebsflächenbereich 8f ist zwischen der ersten und der zweiten Orthogonalebene 8c/d angeordnet. Die erste Orthogonalebene 8c begrenzt den Werkzeug-Anschlussbereich 8a auf der der Werkzeugmaschine zugewandten Seite in Richtung der Werkzeug-Drehachse 8b, die zweite Orthogonalebene 8d begrenzt den Werkzeug-Anschlussbereich 8a auf der von der Werkzeugmaschine abgewandten Seite. Der Werkzeug-Antriebsflächenbereich 8f ist zur Übertragung der Antriebskräfte von der Werkzeugmaschine auf die Werkzeugeinrichtung 8 vorgesehen. Dazu weist der Werkzeug-Antriebsflächenbereich 8f wenigstens abschnittsweise die negative Form des Abtriebsflächenbereichs 9a auf und ermöglicht damit eine formschlüssige Verbindung zwischen der Werkzeugeinrichtung 8 und der Werkzeugaufnahmeeinrichtung 1. Die Werkzeugeinrichtung 8 weist eine Werkzeug-Kodierungseinrichtung 8e auf, durch diese greifen die erste und die zweite Hakeneinrichtung 4a/b der Halteeinrichtung 4. Die Hakeneinrichtungen 4a/b üben im Bereich der Wirkflächen 4c eine Haltekraftwirkung 4h auf die Werkzeugeinrichtung 8 aus. Die Werkzeugeinrichtung 8 wird mittels dieser Haltekraftwirkungen 4h an der Werkzeugmaschine gehalten. Durch die doppelte Neigung um die Winkel α und β (nicht dargestellt) der Abtriebsfiächenbereiche 9a des Drehmomentübertragungsbereichs 9 wird die Werkzeugeinrichtung 8 spielfrei in der Werkzeugaufnahmeeinrichtung 1 gehalten. Die Haltekraftwirkungen 4h werden mittelbar durch die Spanneinrichtung 3 aufgebracht. Die Hakeneinrichtungen 4a/b der Halteeinrichtung 4 sind um den Hakendrehpunkt 4d drehbar gelagert. Die Spanneinrichtung 3 kontaktiert mittels des Bewegungselements 6 die Halteeinrichtung 4. Durch die beschriebene Gestaltung der Führungsausnehmung 5e wird die Summe der Haltekraftwirkungen 4h gegenüber der Spannkraft 3a verstärkt und ein besonders sicheres Halten der Werkzeugeinrichtung 8 in der Werkzeugaufnahmeeinrichtung 1 ermöglicht.

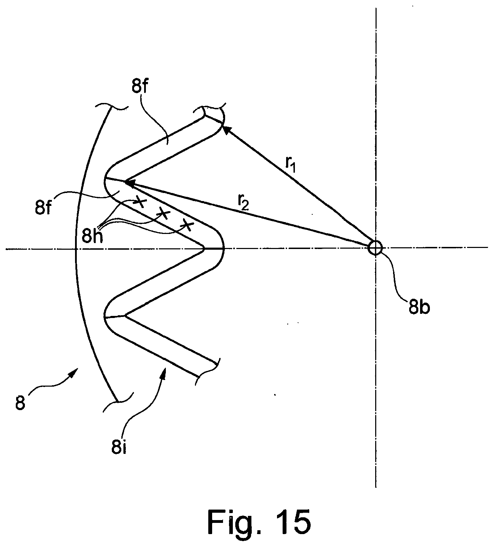

Figur 15 zeigt den Verlauf der Werkzeug-Seitenwandung 8i, wobei diese die Werkzeug-Antriebsflächenbereiche 8f aufweist. Die Werkzeug-Antriebsflächenbereiche 8f sind sternförmig um die Werkzeug-Drehachse 8b angeordnet und abschnittsweise konjugiert zu den Abtriebsflächenbereichen des Drehmomentübertragungsbereichs (nicht dargestellt) angeordnet. Die Werkzeug-Seitenwandung 8i verläuft im Bereich der Werkzeug-Antriebsflächenbereiche 8f zwischen einem ersten Abstand r1 und einem zweiten Abstand r2 zur Werkzeug-Drehachse 8b. Die Werkzeug-Antriebsflächenbereiche 8f weisen ihrerseits Werkzeug-Flächenpunkte 8h auf. Durch den an die Abtriebsflächenbereiche des Drehmomentübertragungsbereichs (nicht dargestellt) angepassten Verlauf der Werkzeug-Antriebsflächenbereiche 8f ist eine formschlüssige Übertragung der Antriebskräfte von der Werkzeugmaschine auf die Werkzeugeinrichtung 8 ermöglicht, damit können besonders große Antriebskräfte sicher übertragen werden.

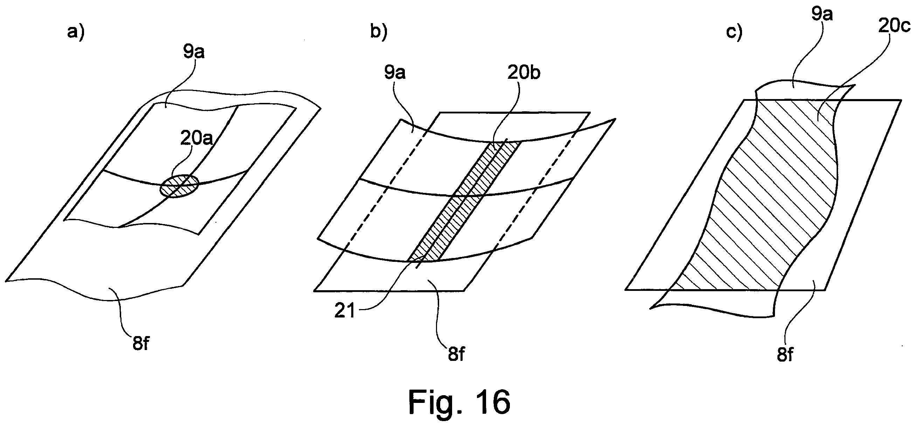

Figur 16 zeigt verschiedene Berührbereiche 20a, 20b, 20c zwischen dem Werkzeug-Antriebsflächenbereich 8f und dem Abtriebsflächenbereich 9a des Drehmomentübertragungsbereichs 9. Dabei hängt die Form und Art dieser Berührbereiche 20a, 20b, 20c von der Form der beiden Abtriebsflächenbereiche 8f/9a und deren Zusammenwirken ab. Fig.16a zeigt einen punktförmigen Berührbereich 20a, dabei weist dieser Berührbereich 20a eine kreisrunde oder ellipsenförmige Ausdehnung auf. Ein punktförmiger Berührbereich 20a ist besonders unempfindlich gegenüber einer ungenauen Positionierung der Werkzeugeinrichtung gegenüber der Werkzeugmaschine, wie diese durch Toleranzen bei der Fertigung der Werkzeugeinrichtung verursacht werden kann. Fig.16b zeigt einen linienförmigen Berührbereich 20b, dabei weist dieser Berührbereich 20b entlang der Berührlinie 21 eine große Erstreckung und quer zu dieser eine kleine Erstreckung auf. Ein linienförmiger Berührbereich 20b bietet gegenüber einem punktförmigen Berührbereich 20a eine größere Kontaktfläche und es lassen sich größere Antriebskräfte von der Werkzeugmaschine auf die Werkzeugeinrichtung übertragen. Fig.16c zeigt einen flächigen Berührbereich 20c. Ein flächiger Berührbereich 20c bietet gegenüber einem linienförmigen Berührbereich 20b eine größere Kontaktfläche und es lassen sich daher größere Antriebskräfte von der Werkzeugmaschine auf die Werkzeugeinrichtung übertragen. Gegenüber einer punktförmigen Berührung 20a erfordern eine linienförmige 20b und eine flächige 20c Berührung eine höhere Genauigkeit, sowohl bei der Fertigung der Abtriebs/Antriebsflächenbereiche 8f/9a als auch bei der Positionierung der Werkzeugeinrichtung an der Werkzeugmaschine. Die Abtriebsflächenbereiche 9a und die Werkzeug-Antriebsflächenbereiche 8f können so aufeinander abgestimmt sein, dass sich eine flächige (Fig.11c) oder linienförmige Berührung (Fig.11b) erst bei der Übertagung von nennenswerten Antriebskräften einstellt, beispielsweise bei Betrieb der Werkzeugmaschine mit Nennleistung.

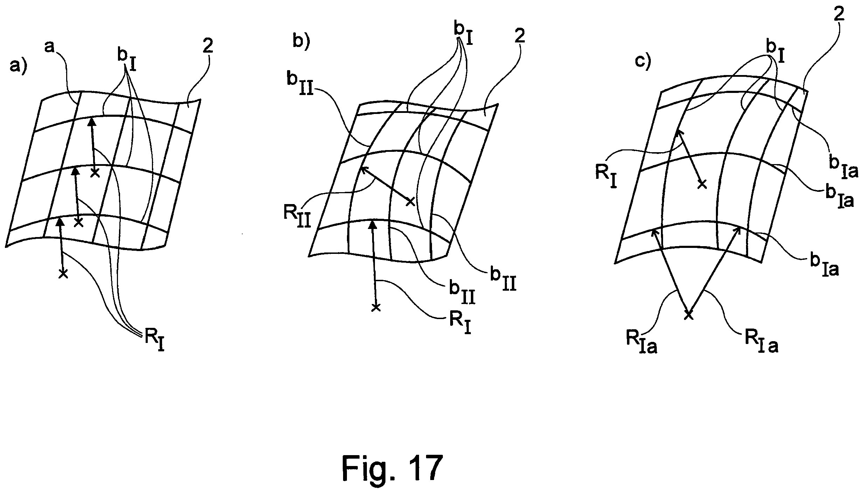

Figur 17 zeigt unterschiedliche Ausschnitte eines Abtriebsflächenbereichs 9a. Nicht dargestellt ist ein ebener Abtriebsflächenbereich, ein solcher ist auch möglich. Fig.17a zeigt einen einsinnig gekrümmten Abschnitt eines Abtriebsflächenbereichs 9a. Dieser Abschnitt des Abtriebsflächenbereichs 9a ist mittels gerader Gitternetzlinien a und gekrümmter Gitternetzlinien b_{I} beschreibbar. Die gekrümmten Gitternetzlinien b_{I} weisen einen konstanten Krümmungsradius R_{I} auf. Ein derartiger Abtriebsflächenbereich 9a entspricht abschnittsweise einer Zylindermantelfläche, soweit mehrere unterschiedliche Krümmungsradien R_{I} vorgesehen sind entspricht er einer Kegelmantelfläche (nicht dargestellt). Dabei kann die Größe des Krümmungsradius R, so gewählt sein, dass sich der Abtriebsflächenbereich 9a bei der Übertragung von Antriebskräften abschnittsweise zu einer Ebene verändert oder an die Gegenfläche (nicht dargestellt), also den Werkzeug-Antriebsflächenbereich 8f, mit welcher dieser zum Übertragen der Antriebskräfte zusammenwirkt, anpasst. Fig.17b zeigt einen Abschnitt eins Abtriebsflächenbereichs 9a mit zweisinniger Krümmung. Dieser Abschnitt des Abtriebsflächenbereichs 9a ist mittels gekrümmter Gitternetzlinien b_{I} und gekrümmter Gitternetzlinien b_{II} beschreibbar. Die Gitternetzlinien b_{I} weisen einen konstanten Krümmungsradius R_{I} und die Gitternetzlinien b_{II} weisen einen konstanten Krümmungsradius R_{II} auf. Ein derartiger Abtriebsflächenbereich 9a entspricht, für den Sonderfall, dass der erste R_{I} und der zweite R_{II} Krümmungsradius gleich groß sind, einer Kugeloberfläche. In Fig.17b ist eine Abtriebsflächenbereich 9a mit unterschiedlichen Krümmungsradien R_{I} und R_{II} dargestellt. Dabei kann die Größe der Krümmungsradien R_{I} und R_{II} so gewählt sein, dass sich der Abtriebsflächenbereich 9a bei der Übertragung von Antriebskräften wenigstens abschnittsweise zu einer Ebene verändert oder an den Werkzeug-Antriebsflächenbereich 8f (nicht dargestellt) mit welchem dieser zum Übertragen der Antriebskräfte zusammenwirkt, anpasst. Fig.17c zeigt einen Abschnitt eins Abtriebsflächenbereichs 9a mit zweisinniger Krümmung. Dieser Abschnitt des Abtriebsflächenbereichs 9a ist mittels Gitternetzlinien b_{I} mit konstantem Krümmungsradius R_{I} und Gitternetzlinien b_{Ia} mit variablem Krümmungsradius R_{Ia} beschreibbar. Bei einem derartigen Abtriebsflächenbereich 9a können auch sämtliche Gitternetzlinien einen variablen Krümmungsradius aufweisen (nicht dargestellt). Die Größe der Krümmungsradien R_{Ia} und R_{II} kann so gewählt sein, dass sich der Abtriebsflächenbereich 9a bei der Übertragung von Antriebskräften abschnittsweise zu einer Ebene verändert oder an den Werkzeug-Antriebsflächenbereich 8f (nicht dargestellt) mit welchem dieser zum Übertragen der Antriebskräfte zusammenwirkt, anpasst. In Figur 17 sind konkav gekrümmte Abtriebsflächenbereiche 9a dargestellt, die dargelegten Überlegungen sind auf konvex gekrümmte Antriebs-/Abtriebsflächenbereiche entsprechend übertragbar. Vorteilhaft wird eine konkav-konvex Paarung der Antriebs-/Abtriebsflächenbereiche 8f/9a gewählt da somit große Antriebskräfte übertragbar sind oder eine Paarung konvex-konvex, da somit eine einfache Positionierung der Werkzeugeinrichtung ermöglicht ist.

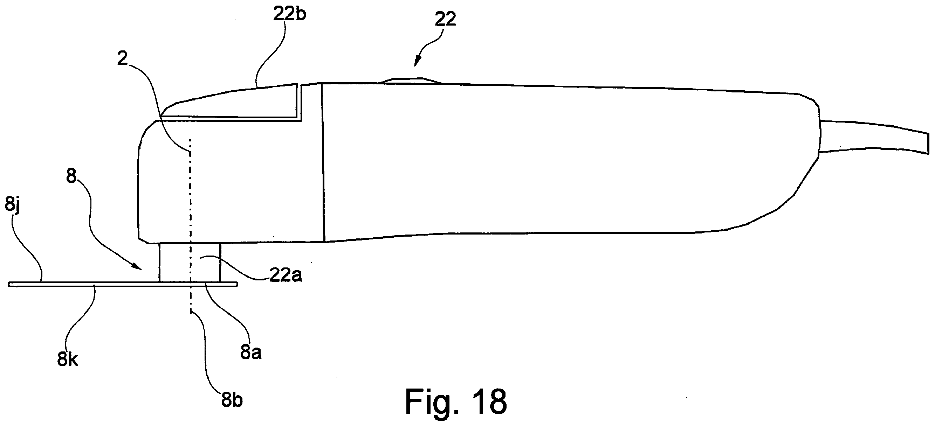

Figur 18 zeigt eine Werkzeugeinrichtung 8 welche in einer Werkzeugmaschine 22 aufgenommen ist. Die Werkzeugeinrichtung 8 weist einen Werkzeug-Anschlussbereich 8a auf, mit diesem wird es mit der Werkzeugmaschine 22 verbunden. Die Werkzeugmaschine 22 weist eine Abtriebsspindel 22a auf, diese leitet die Antriebskräfte an die Werkzeugeinrichtung 8, insbesondere deren Werkzeug-Anschlussbereich 8a. Die Abtriebsspindel 22a bewegt sich um die Antriebsachse 2, insbesondere dreh-oszillierend, dabei wird auch die Werkzeugeinrichtung 8 in eine ebensolche Bewegung versetzt. Die Werkzeugeinrichtung 8 weist einen Arbeitsbereich 8j auf, dieser ist dazu eingerichtet auf ein Werkstück oder eine Werkstückanordnung (nicht dargestellt) einzuwirken. Die Antriebskräfte der Werkzeugmaschine 22 werden mittels des Werkzeug-Verbindungsbereichs 8k vom Werkzeug-Anschlussbereich 8a auf den Arbeitsbereich 8j übertragen. Die Werkzeugmaschine 22 weist einen Betätigungshebel 22b auf, dieser ist dazu eingerichtet einen Wechsel der Werkzeugeinrichtung 8 zu ermöglichen.

**Bezugszeichenliste:**

| | |
|---|---|
| 1 | Werkzeugaufnahmeeinrichtung einer handgeführten Werkzeugmaschine |
| 2 | Antriebsachse |
| 3 | Spanneinrichtung |
| 3a | Spannkraft |
| 4 | Halteeinrichtung |
| 4a | Erste Hakeneinrichtung |
| 4b | Zweite Hakeneinrichtung |
| 4c | Haltefläche |
| 4d | Hakendrehpunkt |
| 4e | Betätigungsbereich von 4a |
| 4f | Betätigungsbereich von 4b |
| 4g | Halteeinrichtungs-Begrenzungsfläche |
| 4h | Haltekraftwirkung |
| 5 | Sperreinrichtung |
| 5a | Erster Sperrflächenabschnitt |
| 5b | Zweiter Sperrflächenabschnitt |
| 5c | Zwischenelement |
| 5d | Sperrkraftpotential |
| 5e | Führungsausnehmung |
| 6 | Bewegungselement |
| 6a | Momentane Bewegungsrichtung von 6 |
| 7 | Kontaktfläche |
| 7a | Normale auf die Kontaktfläche |
| 8 | Werkzeugeinrichtung |
| 8a | Werkzeug-Anschlussbereich |
| 8b | Werkzeug-Drehachse |
| 8c | Erste Orthogonalebene |
| 8d | Zweite Orthogonalebene |
| 8e | Werkzeug-Kodierungseinrichtung |
| 8f | Werkzeug-Antriebsflächenbereich |
| 8g | Axiale Erstreckung des Werkzeug-Antriebsflächenbereichs |
| 8h | Werkzeug-Flächenpunkt |
| 8i | Werkzeug-Seitenwandung |
| 8j | Arbeitsbereich |
| 8k | Werkzeug-Verbindungsbereich |
| 9 | Drehmomentübertragungsbereich |
| 9a | Abtriebsflächenbereich |
| 9b | Flächenpunkt |
| 9c | Verbindungsbereich |
| 9d | Befestigungsschraube |
| 9e | Unterlegscheibe |
| 9f | Mutternteil |
| 9g | Zugankereinrichtung |
| 10 | Erstes Hebelelement |
| 11 | Zweites Hebelelement |
| 12 | Verbindungselement |
| 13 | obere Begrenzungsebene |
| 14 | Untere Begrenzungsebene |
| 15 | Axialebene |
| 16 | Radialebene |
| 17 | Tangentialebene |
| 18 | Normale auf einen Abtriebsflächenbereich |
| 19 | Kodierungseinrichtung |
| 19a | Erhabene Kodierungseinrichtung |
| 19b | Kodierungseinrichtung mit Ausnehmung |
| 20a | Punktförmiger Berührbereich |
| 20b | Linienförmiger Berührbereich |
| 20c | Flächenförmiger Berührbereich |
| 21 | Berührlinie |
| 22 | Werkzeugmaschine |
| 22a | Abtriebsspindel |
| 22b | Betätigungshebel |
| γ₁ | Winkel |
| γ₂ | Winkel |
| T1 | Erstes Drehmoment auf zweites Hebelelement |
| T2 | Zweites Drehmoment auf zweites Hebelelement |
| T3 | Drittes Drehmoment auf zweites Hebelelement |
| d1 | Drehpunkt erstes Hebelelement |
| d2 | Drehpunkt zweites Hebelelement |
| F1 | Erste Kraftwirkung auf zweites Hebelelement |
| F2 | Zweite Kraftwirkung auf zweites Hebelelement |
| F3 | Dritte Kraftwirkung auf zweites Hebelelement |
| a1 | Abstand zwischen d2 und F1 |
| a2 | Abstand zwischen d2 und F2 |
| a3 | Abstand zwischen d2 und F3 |
| r_1 | Erster Abstand Werkzeug-Seitenwandung zu Werkzeug-Drehachse |
| r_2 | Zweiter Abstand Werkzeug-Seitenwandung zu Werkzeug-Drehachse |
| R_{I} | erster Krümmungsradius eines Abtriebsflächenbereichs |
| R_{Ia} | Variabler Krümmungsradius eines Abtriebsflächenbereichs |
| R_{II} | Zweiter Krümmungsradius eines Abtriebsflächenbereichs |
| a | Gerade verlaufende Gitternetzlinie eines Abtriebsflächenbereichs |
| b_{I} | Erste gekrümmte Gitternetzlinie eines Abtriebsflächenbereichs |
| b_{II} | Zweite gekrümmte Gitternetzlinie eines Abtriebsflächenbereichs |
| b_{Ia} | Dritte Gitternetzlinie mit variabler Krümmung eines Abtriebsflächenbereichs |
| α | Winkel |
| β | Winkel |

## Patentansprüche

1. Werkzeugmaschine **(22),** insbesondere handgeführte Werkzeugmaschine, die eine um eine Antriebsachse **(2)** bewegbare, insbesondere oszillierend bewegbare, Werkzeugaufnahmeeinrichtung **(1)** aufweist,
wobei diese Werkzeugaufnahmeeinrichtung **(1)** dazu eingerichtet ist, eine Werkzeugeinrichtung **(8)** derart an der Werkzeugmaschine **(22)** zu halten, dass die Antriebsachse **(2)** und eine Werkzeug-Drehachse **(8b)** im Wesentlichen zusammenfallen,
wobei die Werkzeugaufnahmeeinrichtung **(1)** wenigstens eine Spanneinrichtung **(3),** wenigstens eine Halteeinrichtung **(4)** und wenigstens eine Sperreinrichtung **(5)** aufweist,
wobei die Halteeinrichtung **(4)** von wenigstens einer ersten geöffneten in wenigstens eine zweite geschlossene Position bewegbar ist, wobei die Halteeinrichtung **(4)** ferner von der Spanneinrichtung **(3),** vorzugsweise in Schließrichtung von dieser ersten geöffneten in Richtung zu dieser zweiten geschlossenen Position, mit einer Spannkraft **(3a)** beaufschlagbar ist,
wobei die Sperreinrichtung **(5)** zwischen wenigstens einer ersten Sperrposition und wenigstens einer zweiten Entsperrposition bewegbar ist, wobei die Sperreinrichtung **(5)** dazu eingerichtet ist mit dieser Halteeinrichtung **(4)** zusammenzuwirken, wobei eine Bewegung der Halteeinrichtung **(4)** durch diese Sperreinrichtung **(5)** in wenigstens einer Sperrposition blockierbar ist,
**dadurch gekennzeichnet,**
**dass** von der Spanneinrichtung **(3)** auf die Sperreinrichtung **(5)** in der Sperrposition eine Sperrkraftwirkung aufbringbar ist;
**dass** von der Werkzeugeinrichtung **(8)** auf die Sperreinrichtung **(5)** eine Entsperrkraftwirkung aufbringbar ist;
**dass** diese Entsperrkraftwirkung der Sperrkraftwirkung entgegengerichtet ist;
**dass** die Spanneinrichtung **(3)** ein Bewegungselement **(6)** aufweist;
**dass** dieses Bewegungselement **(6)** entlang einer ersten Bewegungsrichtung **(6a)** bewegbar ist, vorzugsweise dass diese Bewegungsrichtung wenigstens abschnittsweise rotatorisch und/oder translatorisch ist;
**dass** die Sperreinrichtung **(5)** eine Kontaktfläche **(7)** aufweist; und
**dass** diese Kontaktfläche **(7)** zur Kontaktierung der Sperreinrichtung **(5)** mit diesem Bewegungselement **(6)** eingerichtet ist;
wobei die Sperreinrichtung **(5)** derart gestaltet ist, dass eine durch die Werkzeugeinrichtung **(8)** mittelbar oder unmittelbar auf diese aufgebrachte Kraft die Sperreinrichtung **(5)** von einer dieser Sperrpositionen in eine dieser Entsperrpositionen bewegt.

2. Werkzeugmaschine gemäß Anspruch 1, **dadurch gekennzeichnet,**
**dass** die Spanneinrichtung **(3)** wenigstens eine Federeinrichtung aufweist; und
**dass** diese Federeinrichtung aus einer Gruppe von Einrichtungen ausgewählt ist, welche wenigstens
- Gas- oder Öldruckfedereinrichtungen,
- Blatt- oder Tellerfedereinrichtungen,
- Spiralfedereinrichtungen,
- Schraubenfeder,
- Torsionsfeder, insbesondere Drehstabfeder,
- Elastomerfedereinrichtungen,
- magnetische und elektromagnetische Federeinrichtungen umfasst oder eine Kombination aus mehreren dieser Einrichtungen.

3. Werkzeugmaschine gemäß einem der vorhergehenden Ansprüche, **dadurch gekennzeichnet, dass** die Halteeinrichtung **(4)** in wenigstens einer Drehrichtung drehbar gelagert ist und/oder in wenigstens einer Richtung translatorisch bewegbar gelagert ist.

4. Werkzeugmaschine gemäß einem der vorhergehenden Ansprüche, **dadurch gekennzeichnet, dass** die Werkzeugaufnahmeeinrichtung (1) wenigstens eine, vorzugsweise eine Vielzahl, bevorzugt drei oder vier oder fünf oder sechs dieser Halteeinrichtungen **(4)** aufweist, oder besonderes bevorzugt zwei dieser Halteeinrichtungen **(4)** aufweist.

5. Werkzeugmaschine gemäß Anspruch 4, **dadurch gekennzeichnet, dass** jeweils zwei dieser Halteeinrichtungen **(4)** im Wesentlichen gegenläufig bewegbar gelagert sind.

6. Werkzeugmaschine gemäß einem der vorhergehenden Ansprüche, **dadurch gekennzeichnet,**
**dass** die Sperreinrichtung **(5)** einen ersten Sperrflächenabschnitt **(5a)** und einen zweiten Sperrflächenabschnitt **(5b)** aufweist;
**dass** dieser erste Sperrflächenabschnitt **(5a)** diesen zweiten Sperrflächenabschnitt **(5b)** mittelbar oder unmittelbar kontaktiert; und
**dass** wenigstens eine Komponente dieser Spannkraft **(3a)** im Wesentlichen parallel zu wenigstens einer Normalen auf diesen ersten Sperrflächenabschnitt **(5a)** oder diesen zweiten Sperrflächenabschnitt **(5b)** gerichtet ist,
wobei dieser erste Sperrflächenabschnitt **(5a)** gegenüber diesem zweiten Sperrflächenabschnitt **(5b)** in der Sperrposition bevorzugt gelagert, insbesondere gleitgelagert oder weiter vorzugsweise wälzgelagert ist.

7. Werkzeugmaschine gemäß einem der vorhergehenden Ansprüche, **dadurch gekennzeichnet,**
**dass** eine Normale **(7a)** auf diese Kontaktfläche **(7)** in einem Berührpunkt mit diesem Bewegungselement **(6),** wenn sich die Sperreinrichtung **(5)** im Wesentlichen in einer dieser Sperrpositionen befindet, mit dieser Bewegungsrichtung **(6a)** des Bewegungselements **(6)** einen Winkel γ₁ einschließt; und
**dass** dieser Winkel γ₁ vorzugsweise größer ist als 80°, bevorzugt größer ist als 90° und besonders bevorzugt größer als 120°; und/oder
**dass** γ₁ kleiner oder gleich 315°, bevorzugt kleiner als 270° und besonders bevorzugt kleiner als 210° ist und besonders bevorzugt im Wesentlichen 186° ist.

8. Werkzeugmaschine gemäß einem der vorhergehenden Ansprüche, **dadurch gekennzeichnet,**
**dass** eine Normale **(7a)** auf die Kontaktfläche **(7)** in einem Berührpunkt mit dem Bewegungselement **(6),** wenn sich die Sperreinrichtung **(5)** im Wesentlichen in einer dieser Entsperrpositionen befindet, mit dieser Bewegungsrichtung **(6a)** des Bewegungselements **(6)** einen Winkel γ₂ einschließt; und
**dass** dieser Winkel γ₂ vorzugsweise kleiner oder gleich 180° ist, bevorzugt kleiner als 135° und besonders bevorzugt kleiner als 115° und weiter vorzugsweise größer oder gleich 80°, bevorzugt größer als 95° und besonders bevorzugt größer als 105° ist.

9. Werkzeugmaschine gemäß einem der vorhergehenden Ansprüche, **dadurch gekennzeichnet, dass** die Sperreinrichtung **(5)** ein erstes Hebelelement **(10),** ein zweites Hebelelement **(11)** und ein Verbindungselement **(12)** aufweist, wobei
bevorzugt dieses erste und dieses zweite Hebelelement **(10, 11)** drehbar gelagert ist; und
dieses erste Hebelelement **(10)** von diesem Verbindungselement **(12)** in einem ersten Kontaktbereich und dieses zweite Hebelelement **(11)** von diesem Verbindungselement **(12)** in einem zweiten Kontaktbereich kontaktierbar ist.

10. Werkzeugmaschine gemäß Anspruch 9, **dadurch gekennzeichnet,**
**dass** in einer dieser Sperrpositionen eine Verbindungsgerade von diesem ersten Kontaktbereich durch diesen zweiten Kontaktbereich einen ersten Abstand a1 zu einem Drehpunkt d2 des zweiten Hebelelements **(11)** aufweist;
**dass** von diesem ersten Hebelelement **(10)** eine erste Kraftwirkung F1 in Richtung dieser Verbindungsgerade auf dieses zweite Hebelelement **(11)** übertragbar ist; und
**dass** durch diesen Abstand und diese erste Kraftwirkung F1 ein erstes Drehmoment T1 auf dieses zweite Hebelelement **(11)** übertragbar ist.

11. Werkzeugmaschine gemäß einem der Ansprüche 9 oder 10, **dadurch gekennzeichnet,**
**dass** mittels dieser mittelbaren oder unmittelbaren Kraftübertragung von dieser Werkzeugeinrichtung **(8)** auf diese Sperreinrichtung **(5)** in einer dieser Sperrpositionen eine zweite Kraftwirkung F2 auf dieses zweite Hebelelement **(11)** übertragbar ist;
**dass** wenigstens eine Wirkrichtung dieser zweiten Kraftwirkung F2 von diesem Drehpunkt d2 dieser zweiten Hebeleinrichtung um einen Abstand a2 beabstandet ist; und
**dass** durch diesen Abstand a2 und diese zweite Kraftwirkung F2 ein zweites Drehmoment T2 auf dieses zweite Hebelelement **(11)** übertragbar ist.

12. Werkzeugmaschine gemäß einem der Ansprüche 10 oder 11, **dadurch gekennzeichnet, dass** dieses erste Drehmoment T1 diesem zweiten Drehmoment T2 entgegengerichtet ist.

13. Werkzeugmaschine gemäß einem der Ansprüche 9 bis 12, **dadurch gekennzeichnet,**
**dass** in einer dieser Entsperrpositionen eine Verbindungsgerade von diesem ersten Kontaktbereich durch diesen zweiten Kontaktbereich einen dritten Abstand a3 zu diesem Drehpunkt d2 des zweiten Hebelelements **(11)** aufweist,
**dass** von diesem ersten Hebelelement **(10)** eine dritte Kraftwirkung F3 in Richtung dieser Verbindungsgerade auf dieses zweite Hebelelement **(11)** übertragbar ist; und
**dass** durch diesen Abstand a3 und diese dritte Kraftwirkung F3 ein drittes Drehmoment T3 auf dieses zweite Hebelelement **(11)** übertragbar ist, wobei bevorzugt die Richtung dieses dritten Drehmoments T3 der Richtung dieses ersten Drehmoments T1 entgegengerichtet ist.

14. Werkzeugmaschine gemäß einem der vorhergehenden Ansprüche, **dadurch gekennzeichnet,**
**dass** sie eine Anschlusseinrichtung mit einem Drehmomentübertragungsbereich **(9)** aufweist,
**dass** der Drehmomentübertragungsbereich (9) zur Übertragung einer Antriebskraft auf die Werkzeugeinrichtung **(8)** wenigstens zwei im Abstand zu dieser Antriebsachse **(2)** angeordnete Abtriebsflächenbereiche **(9a)** mit je einer Vielzahl von Flächenpunkten **(9b)** aufweist,
**dass** Tangentialebenen **(17)** an diesen Flächenpunkten **(9b)** gegenüber einer Axialebene **(15),** welche diese Antriebsachse **(2)** einschließt, geneigt sind; und
**dass** diese Tangentialebenen **(17)** gegenüber einer Radialebene **(16),** welche sich senkrecht zu der Antriebsachse **(2)** erstreckt, geneigt sind,
wobei bevorzugt wenigstens einer, bevorzugt eine Vielzahl und besonders bevorzugt alle dieser Abtriebsflächenbereiche wenigstens abschnittsweise im Wesentlichen eben und/oder gekrümmt sind.

15. Werkzeugmaschine gemäß Anspruch 14, **dadurch gekennzeichnet,**
**dass** dieser Drehmomentübertragungsbereich **(9)** wenigstens eine erste obere Begrenzungsebene **(13)** und wenigstens eine zweite untere Begrenzungsebene **(14)** aufweist;
**dass** diese Begrenzungsebenen **(13, 14)** im Wesentlichen senkrecht zu dieser Antriebsachse **(2)** angeordnet sind;
**dass** diese Begrenzungsebenen **(13, 14)** voneinander beabstandet sind; und
**dass** jeder dieser Abtriebsflächenbereiche **(9a)** zwischen einer dieser ersten oberen Begrenzungsebene **(13)** und einer dieser zweiten unteren Begrenzungsebene **(14)** angeordnet ist,
wobei sich bevorzugt eine Vielzahl, vorzugsweise alle, dieser Abtriebsflächenbereiche **(9a)** zwischen einer einzigen ersten oberen Begrenzungsebene **(13)** und einer einzigen zweiten unteren Begrenzungsebene **(14)** erstrecken.

16. Werkzeugmaschine gemäß einem der Ansprüche 14 bis 15, **dadurch gekennzeichnet, dass** dieser Drehmomentübertragungsbereich **(9)** eine Vielzahl von Abtriebsflächenbereichen **(9a)** aufweist, welche rotationssymmetrisch um die Antriebsachse **(2)** angeordnet sind.

17. Werkzeugmaschine gemäß einem der Ansprüche 14 bis 16, **dadurch gekennzeichnet,**
**dass** wenigstens jeweils zwei, vorzugsweise mehrere, dieser Abtriebsflächenbereiche **(9a)** symmetrisch zu einer Symmetrieebene angeordnet sind;
**dass** in dieser Symmetrieebene die Antriebsachse **(2)** liegt; und
**dass** weiter vorzugsweise diese Abtriebsflächenbereiche **(9a)** im Wesentlichen aneinanderstoßend angeordnet sind.

18. Werkzeugmaschine gemäß einem der Ansprüche 14 bis 17, **dadurch gekennzeichnet,**
**dass** dieser Drehmomentübertragungsbereich **(9)** eine Seitenwandung aufweist,
**dass** diese Seitenwandung radial beabstandet von der Antriebsachse **(2)** verläuft; und
**dass** diese Seitenwandung die Abtriebsflächenbereiche **(9a)** aufweist, wobei bevorzugt die Seitenwandung im Wesentlichen radial geschlossen um die Antriebsachse **(2)** umläuft.

19. Werkzeugmaschine gemäß einem der Ansprüche 14 bis 18, **dadurch gekennzeichnet, dass** eine Normale auf eine dieser Tangentialebenen **(17)** in radialer Richtung von der Antriebsachse **(2)** weg orientiert ist, vorzugsweise alle Normalen dieser Tangentialebenen **(17)** in radialer Richtung von der Antriebsachse **(2)** weg orientiert sind; oder
dass eine Normale auf eine dieser Tangentialebenen **(17)** in radialer Richtung zu der Antriebsachse **(2)** hin orientiert ist, vorzugsweise alle Normalen dieser Tangentialebenen **(17)** in radialer Richtung zu der Antriebsachse **(2)** hin orientiert sind.

20. Werkzeugmaschine gemäß einem der Ansprüche 14 bis 19, **dadurch gekennzeichnet,**
**dass** zwischen einer dieser Tangentialebenen **(17)** und dieser Radialebene **(16),** wobei diese Radialebene **(16)** senkrecht zur Antriebsachse **(2)** angeordnet ist, der Winkel α eingeschlossen ist, wobei der Winkel α vorzugsweise kleiner als 90°, bevorzugt kleiner als 80° und besonders bevorzugt kleiner als 75° ist, weiter vorzugsweise ist der Winkel α größer als 0°, bevorzugt größer als 45° und besonders bevorzugt größer als 60°, weiter vorzugsweise liegt der Winkel α in einem Bereich von 62,5° bis 72,5°.

21. Werkzeugmaschine gemäß einem der Ansprüche 14 bis 20, **dadurch gekennzeichnet,**
**dass** zwischen einer dieser Tangentialebenen **(17)** und dieser Axialebene **(15),** wobei in dieser Axialebene **(15)** die Antriebsachse **(2)** liegt, der Winkel β eingeschlossen ist, wobei der Winkel β vorzugsweise kleiner als 90°, bevorzugt kleiner als 70° und besonders bevorzugt kleiner als 65° ist und weiter vorzugsweise ist der Winkel β größer als 0°, bevorzugt größer als 15° und besonders bevorzugt größer als 30°, weiter vorzugsweise ist der Winkel β im Wesentlichen 30°, 45° oder 60°.

22. Werkzeugmaschine gemäß einem der Ansprüche 14 bis 21, **dadurch gekennzeichnet, dass** dieser Drehmomentübertragungsbereich **(9)** eine gerade Anzahl von Abtriebsflächenbereichen **(9a)** aufweist, vorzugsweise 4 oder mehr, bevorzugt 8 oder mehr und besonders bevorzugt 16 oder mehr und, weiter vorzugsweise 64 oder weniger, bevorzugt 48 oder weniger und besonders bevorzugt 32 oder weniger.

23. Werkzeugmaschine gemäß einem der Ansprüche 14 bis 22, **dadurch gekennzeichnet, dass** diese Abtriebsflächenbereiche **(9a)** im Wesentlichen sternartig, vorzugsweise in Form eines sternförmigen Polygons angeordnet sind.

24. Werkzeugmaschine gemäß einem der vorhergehenden Ansprüche, **dadurch gekennzeichnet,**
**dass** die Werkzeugmaschine **(22)** einen Kodierungsabschnitt aufweist;
**dass** dieser Kodierungsabschnitt wenigstens eine erste Querschnittsfläche aufweist; und
**dass** dieser Kodierungsabschnitt eine erste Erstreckung im Wesentlichen in senkrechter Richtung zu dieser Querschnittsfläche aufweist, vorzugsweise ist diese erste Erstreckung in Richtung dieser Antriebsachse **(2)** gerichtet,
wobei insbesondere einer dieser Kodierungsabschnitte oder mehrere dieser Kodierungsabschnitte rotationssymmetrisch zu dieser Antriebsachse **(2)** angeordnet sind.

25. Werkzeugmaschine gemäß Anspruch 24, **dadurch gekennzeichnet, dass** die Form wenigstens eines, vorzugsweise aller, Kodierungsabschnitte aus einer Gruppe von Formen ausgewählt ist welche wenigstens:
- ein Polygon mit einer Vielzahl von Ecken, vorzugsweise 3, 4, 5, 6, 7, 8 oder mehr,
- einen Kreis; und
- eine Ellipse
umfasst.

26. Werkzeugmaschinensystem mit einer Werkzeugmaschine **(22)** gemäß mindestens einem der vorhergehenden Ansprüche und wenigstens einer Werkzeugeinrichtung **(8)** zur Verwendung mit dieser Werkzeugmaschine **(22),**
wobei die Halteeinrichtung **(4)** wenigstens eine Wirkfläche **(4c)** zum Übertragen einer Kraftwirkung auf die Werkzeugeinrichtung **(8)** aufweist, welche auf der in Richtung der Antriebsachse **(2),** von der Werkzeugmaschine **(8)** abgewandten Seite von einer Halteeinrichtungs-Begrenzungsfläche **(4g)** begrenzt ist,
wobei die Werkzeugeinrichtung **(8)** einen Werkzeug-Anschlussbereich **(8a)** und eine Werkzeug-Drehachse **(8b)** aufweist, wobei der Werkzeug-Anschlussbereich **(8a)** wenigstens eine Seitenwandung **(8i)** aufweist und sich in axialer Richtung zwischen einer ersten Orthogonalebene **(8c)** und einer zweiten Orthogonalebene **(8d)** erstreckt, wobei diese Ebenen **(8c, 8d)** orthogonal zur Werkzeug-Drehachse **(8b)** angeordnet sind, wobei diese Seitenwandung **(8i)** von der Werkzeug-Drehachse **(8b)** radial beabstandet ist und eine axiale Erstreckung in der Richtung der Werkzeug-Drehachse **(8b)** aufweist,
**dadurch gekennzeichnet, dass**
die Halteeinrichtung **(4)** auf die Werkzeugeinrichtung **(8)** im Bereich der Wirkfläche **(4c)** eine Kraftwirkung ausübt; und
dass diese Kraftwirkung wenigstens eine Komponente in Richtung der Werkzeug-Drehachse **(8b)** aufweist.

27. Werkzeugmaschinensystem gemäß Anspruch 26, **dadurch gekennzeichnet, dass** die Halteeinrichtungs-Begrenzungsfläche **(4g)** und die Wirkfläche **(4c)** der Halteeinrichtung **(4)** zwischen der ersten Orthogonalebene **(8c)** und der zweiten Orthogonalebene **(8d)** des Werkzeuganschlussbereichs **(8a)** liegen, wenn die Werkzeugeinrichtung **(8)** an der Werkzeugmaschine **(22)** befestigt ist, vorzugsweise im Bereich der axialen Erstreckung der Werkzeug-Antriebsflächenbereiche (**8f**) liegen,
wobei die Seitenwandung **(8i)** der Werkzeugeinrichtung **(8)** bevorzugt Werkzeug-Antriebsflächenbereiche (**8f**) aufweist und sich in radialer Richtung wenigstens abschnittsweise zwischen einem ersten und einem zweiten radialen Abstand zu dieser Werkzeug-Drehachse **(8b)** erstreckt; und
wenigstens einer dieser Abschnitte zur Drehmomentübertragung von der Werkzeugmaschine **(22)** auf die Werkzeugeinrichtung **(8)** eingerichtet ist.

## Claims

1. A machine tool (22), in particular hand guided machine tool, which has a tool receiving device (1) movable around a driving axis (2), in particular in an oscillating manner,
wherein the tool receiving device (1) is adapted to hold a tool device (8) on the machine tool (22) such that the driving axis (2) and a tool axis of rotation (8b) are substantially coincident,
wherein the tool receiving device (1) has at least one clamping device (3), at least one holding device (4) and at least one locking device (5),
wherein the holding device (4) can be moved from at least a first open position into at least a second closed position, wherein a clamping force (3a) can be applied onto the holding device (4) by the clamping device (3), preferably in the closing direction from the first open position toward the second closed position,
wherein the locking device (5) can be moved between at least a first locking position and at least a second unlocking position, wherein the locking device (5) is adapted to cooperate with the holding device (4), wherein a movement of the holding device (4) can be blocked in at least one locking position by the locking device (5),
**characterised in**
**that** a locking force effect can be applied from the clamping device (3) on the locking device (5) in the locking position;
**that** an unlocking force effect can be applied from the tool device (8) on the locking device (5);
**that** the unlocking force effect is opposite to the locking force effect;
**that** the clamping device (3) comprises a moving element (6);
**that** the moving element (6) can be moved along a first direction of movement (6a), wherein preferably the direction of movement is at least partially rotary and / or translational;
**that** the locking device (5) has a contact surface (7); and
**that** the contact surface (7) is adapted to contact the locking device (5) with the moving element (6);
wherein the locking device (5) is designed such that the locking device (5) can be moved from one of the locking positions into one of the unlocking positions by a force, which has been applied on the locking device directly or indirectly by the tool device (8).

2. The machine tool according to claim 1, **characterised in**
**that** the clamping device (3) has at least one spring device; and
**that** the spring device is selected from a group of devices comprising at least:
- a gas or oil pressure spring device,
- a sheet or diaphragm spring device,
- a spiral spring device,
- a coil spring,
- a torsion spring, in particular a torsion bar spring,
- an elastomeric spring device, and
- a magnetic and electromagnetic spring device, or
- a combination of two or more of these devices.

3. The machine tool according to any one of the preceding claims, **characterised in that** the holding device (4) is rotatably mounted in at least one direction of rotation and / or movable in at least one direction in a translational manner.

4. The machine tool according to any one of the preceding claims, **characterised in that** the tool receiving device (1) comprises at least one of, preferably a plurality of, preferably three or four or five or six of these holding devices (4), or more preferably two of these holding devices (4).

5. The machine tool according to claim 4, **characterised in that** each two of the holding devices (4) are mounted so as to be movable in substantially opposite directions.

6. The machine tool according to any one of the preceding claims, **characterised in**
**that** the locking device (5) comprises a first locking surface section (5a) and a second locking surface section (5b);
**that** the first locking surface section (5a) contacts directly or indirectly the second locking surface section (5b); and
**that** at least one component of the clamping force (3a) is arranged substantially parallel to at least a normal to the first locking surface section (5a) or to the second locking surface section (5b),
wherein preferably the first locking surface section (5a) is mounted relative to the second locking surface section (5b) in the locking position, and is more preferably mounted with sliding bearings, or even more preferably is mounted with roller bearings.

7. The machine tool according to any one of the preceding claims, **characterised in**
**that**, when the locking device (5) is substantially in one of these locking positions, a normal (7a) to the contact surface (7) in a contact point with the moving element (6) includes an angle γ₁ with the direction of movement (6a) of the moving element (6); and
**that** the angle γ₁ is preferably larger than 80 degrees, preferably larger than 90 degrees, and more preferably larger than 120 degrees; and/or
**that** γ₁ is smaller than or equal to 315 degrees, preferably smaller than 270 degrees, and particularly preferably smaller than 210 degrees, and more preferably substantially 186 degrees.

8. The machine tool according to any one of the preceding claims, **characterised in**
**that**, when the locking device (5) is substantially in one of the unlocking positions, a normal (7a) to the contact surface (7) in a contact point with the moving element (6) includes an angle γ₂ with the direction of movement (6a) of the moving element (6); and
**that** preferably the angle γ₂ is smaller than or equal to 180 degrees, preferably smaller than 135 degrees, and particularly preferably smaller than 115 degrees, and further preferably that γ₂ is larger than or equal to 80 degrees, preferably larger than 95 degrees, and most preferably larger than 105 degrees.

9. The machine tool according to any one of the preceding claims, **characterised in that** the locking device (5) comprises a first lever member (10), a second lever member (11) and a connection member (12), wherein
preferably the first lever member (10) and the second lever member (11) are rotatably mounted; and
the first lever member (10) can be contacted by the connection member (12) in a first contact region, and the second lever member (11) can be contacted by the connection member (12) in a second contact region.

10. The machine tool according to claim 9, **characterised in**
**that** in one of the locking positions, a straight connecting line from the first contact region through the second contact region has a first distance a1 to a pivot point d2 of the second lever member (11);
**that** a first force action F1 in the direction of the straight connecting line can be transmitted from the first lever member (10) to the second lever member (11); and
**that** a first torque T1 can be transmitted to the second lever member (11) by virtue of said distance and the first force action F1.

11. The machine tool according to any one of claims 9 or 10, **characterised in**
**that** by means of the indirect force transmission or by the direct force transmission from the tool device (8) onto the locking device (5) in one of the locking positions, a second force action F2 can be applied to the second lever member (11);
**that** at least one effect direction of the second force action F2 is spaced from the pivot point d2 of the second lever device by a distance a2; and
**that** a second torque T2 can be transmitted to the second lever member (11) by virtue of the distance a2 and the second force action F2.

12. The machine tool according to any one of claims 10 or 11, **characterised in that** the direction of the first torque T1 is opposite to the direction of the second torque T2.

13. The machine tool according to any one of claims 9 to 12, **characterised in**
**that** in one of the unlocking positions a straight connecting line from said first contact region through said second contact region has a third distance a3 to the pivot point d2 of the second lever member (11),
**that** a third force action F3 can be transmitted from the first lever member (10) to the second lever member (11) in the direction of the straight connecting line; and
**that** a third torque T3 can be transmitted to the second lever member (11) by virtue of the distance a3 and the third force action F3, wherein preferably the direction of the third torque T3 is opposite to the direction of the first torque T1.

14. The machine tool according to any one of the preceding claims, **characterised in**
**that** the machine tool comprises a connection device with a torque transmission region (9),
**that** the torque transmission region (9) comprises at least two output area regions (9a) each having a plurality of surface points (9b) for transmitting a driving force to the tool device (8), wherein the output area regions (9a) are spaced apart from the driving axis (2),
**that** tangent planes (17) on the surface points (9b) are inclined relative to an axial plane (15), which includes the driving axis (2); and
**that** the tangent planes (17) are inclined relative to a radial plane (16), which extends perpendicularly to the driving axis (2),
wherein preferably at least one of, preferably a plurality of, and particularly preferably all of the output area regions are at least in sections substantially planar, and/or at least partially curved.

15. The machine tool according to claim 14, **characterised in**
**that** the torque transmission area (9) has at least one first upper boundary plane (13) and at least one second lower boundary plane (14);
**that** the boundary planes (13, 14) are disposed substantially perpendicular to the driving axis (2);
**that** the boundary planes (13, 14) are spaced apart from each other; and
**that** each of the output area regions (9a) are disposed between one of the first upper boundary planes (13) and one of the second lower boundary planes (14),
wherein preferably a plurality of, preferably all of, the output area regions (9a) extend between one single first upper boundary plane (13) and one single second lower boundary plane (14).

16. The machine tool according to any one of claims 14 to 15, **characterised in that** the torque transmission region (9) has a plurality of output area regions (9a) which are arranged rotationally symmetrical around the driving axis (2).

17. The machine tool according to any one of claims 14 to 16, **characterised in**
**that** at least two, preferably several of the output area regions (9a) are arranged symmetrically to a plane of symmetry;
**that** the driving axis (2) is located in this plane of symmetry; and
**that** further preferably the output area regions (9a) are arranged substantially contiguously.

18. The machine tool according to any one of claims 14 to 17, **characterised in**
**that** the torque transmission region (9) comprises a side wall,
**that** the side wall extends spaced radially from the driving axis (2); and
**that** the side wall comprises the output area regions (9a),
wherein preferably the side wall extends substantially radially closed around the driving axis (2).

19. The machine tool according to any one of claims 14 to 18, **characterised in that** a normal to one of the tangent planes (17) is oriented in the radial direction away from the driving axis (2), preferably that all normals to the tangent planes (17) are oriented in the radial direction away from the driving axis (2); or
that a normal to one of the tangent planes (17) is oriented in the radial direction towards the driving axis (2), preferably that all normals to the tangent planes (17) are oriented in the radial direction towards the driving axis (2).

20. The machine tool according to any one of claims 14 to 19, **characterised in**
**that** the angle α is enclosed between one of the tangent planes (17) and the radial plane (16), wherein the radial plane (16) is disposed perpendicularly to the driving axis (2), wherein the angle α is preferably smaller than 90 degrees, preferably smaller than 80 degrees, and particularly preferably smaller than 75 degrees, further preferably the angle α is larger than 0 degrees, preferably larger than 45 degrees, and most preferably larger than 60 degrees, and further preferably the angle α is in a range of 62.5 degrees to 72.5 degrees.

21. The machine tool according to any one of claims 14 to 20, **characterised in**
**that** the angle β is enclosed between one of the tangent planes (17) and the axial plane (15), wherein the driving axis of rotation (2) is located in this axial plane (15), wherein the angle β is preferably smaller than 90 degrees, preferably smaller than 70 degrees, and particularly preferably smaller than 65 degrees, and further preferably the angle β is larger than 0 degrees, preferably larger than 15 degrees, and most preferably larger than 30 degrees, and further preferably the angle β is substantially 30 degrees, 45 degrees or 60 degrees.

22. The machine tool according to any one of claims 14 to 21, **characterised in that** the torque transmission region (9) has an even number of output area regions (9a), preferably 4 or more, preferably 8 or more, and particularly preferably 16 or more, and further preferably 64 or less, preferably 48 or less, and particularly preferably 32 or less.

23. The machine tool according to any one of claims 14 to 22, **characterised in that** the output area regions (9a) are arranged substantially in a star-shaped manner, and preferably the output area regions are arranged in the form of a star-shaped polygon.

24. The machine tool according to any one of the preceding claims, **characterised in**
**that** the machine tool (22) has an encoding section;
**that** the encoding section has at least a first cross-sectional area; and
**that** the encoding section has a first extension essentially in a direction perpendicular to the cross-sectional area, and preferably that the first extension is directed in the direction of the driving axis (2),
in particular wherein one of the encoding sections or several of the encoding sections are arranged rotationally symmetrically with respect to the driving axis (2).

25. The machine tool according to claim 24, **characterised in that** the shape of at least one encoding section, preferably of all encoding sections is selected from a group of shapes comprising at least:
- a polygon having a plurality of corners, preferably 3, 4, 5, 6, 7, 8 or more corners,
- a circle; and
- an ellipse.

26. A machine tool system with a machine tool (22) according to at least one of the preceding claims and at least one tool device (8) for use with the machine tool (22),
wherein the holding device (4) comprises at least one effective area (4c) for transmitting a force action to the tool device (8), which is bounded by a holding device boundary surface (4g) in the direction of the driving axis (2) on the far side from the machine tool (8),
wherein the tool device (8) comprises a tool attachment region (8a) and a tool axis of rotation (8b), wherein the tool attachment region (8a) has at least one side wall (8i) and extends in the axial direction between a first orthogonal plane (8c) and a second orthogonal plane (8d), wherein these planes (8c, 8d) are arranged perpendicularly to the tool axis of rotation (8b), wherein the side wall (8i) is spaced apart radially from the tool axis of rotation (8b) and has an axial extension in the direction of the tool axis of rotation (8b),
**characterised in**
**that** the holding device (4) exerts a force action on the tool device (8) in the region of the effective area (4c); and
**that** the force action has at least one component in the direction of the tool axis of rotation (8b).

27. The machine tool system according to claim 26, **characterised in that** the holding device boundary surface (4g) and the effective area (4c) of the holding device (4) are arranged between the first orthogonal plane (8c) and the second orthogonal plane (8d) of the tool attachment region (8a) when the tool device (8) is mounted on the machine tool (22), preferably in the region of the axial extension of the tool device driving area regions (8f),
wherein the side wall (8i) of the tool device (8) preferably comprises tool device driving area regions (8f) and extends in a radial direction at least in sections between a first radial distance and a second radial distance from said tool axis of rotation (8b); and
that at least one of the sections is configured to transmit the torque from the machine tool (22) onto the tool device (8).

## Revendications

1. Machine-outil (22), en particulier machine-outil à guidage manuel, qui présente un dispositif de logement d'outil (1) pouvant être déplacé autour d'un axe d'entraînement (2), en particulier pouvant être déplacé de manière oscillante,
sachant que ledit dispositif de logement d'outil (1) est mis au point afin de maintenir un dispositif outil (8) de telle manière au niveau de la machine-outil (22) que l'axe d'entraînement (2) et un axe de rotation d'outil (8b) coïncident sensiblement,
sachant que le dispositif de logement d'outil (1) présente au moins un dispositif de serrage (3), au moins un dispositif de maintien (4) et au moins un dispositif de blocage (5),
sachant que le dispositif de maintien (4) peut être déplacé d'au moins une première position ouverte dans au moins une deuxième position fermée, sachant que le dispositif de maintien (4) peut être en outre soumis à l'action d'une force de serrage (3a) exercée par le dispositif de serrage (3), de préférence dans la direction de fermeture depuis ladite première position ouverte en direction de ladite deuxième position fermée, sachant que le dispositif de blocage (5) peut être déplacé entre au moins une première position de blocage et au moins une deuxième position de déblocage, sachant que le dispositif de blocage (5) est mis au point afin de coopérer avec ledit dispositif de maintien (4), sachant qu'un déplacement du dispositif de maintien (4) peut être bloqué dans au moins une position de blocage par ledit dispositif de blocage (5),
**caractérisée en ce**
**qu'**une action de force de blocage peut être appliquée par le dispositif de serrage (3) sur le dispositif de blocage (5) dans la position de blocage,
**qu'**une action de force de déblocage peut être appliquée par le dispositif outil (8) sur le dispositif de blocage (5),
**que** ladite action de force de déblocage est contraire à l'action de force de blocage,
**que** le dispositif de serrage (3) présente un élément de déplacement (6),
**que** ledit élément de déplacement (6) peut être déplacé le long d'une première direction de déplacement (6a), de préférence que ladite direction de déplacement se fait au moins par endroits par rotation et/ou par translation, que le dispositif de blocage (5) présente une surface de contact (7), et
**que** ladite surface de contact (7) est mise au point afin d'établir un contact entre le dispositif de blocage (5) et ledit élément de déplacement (6),
sachant que le dispositif de blocage (5) est configuré de telle manière qu'une force appliquée indirectement ou directement sur ledit dispositif de blocage par le dispositif outil (8) déplace le dispositif de blocage (5) d'une desdites positions de blocage dans l'une desdites positions de déblocage.

2. Machine-outil selon la revendication 1, **caractérisée en ce**
**que** le dispositif de serrage (3) présente au moins un dispositif à ressort, et
**que** ledit dispositif à ressort est choisi parmi un groupe de dispositifs, qui comprend au moins
- des dispositifs à ressort à gaz ou à pression d'huile,
- des dispositifs à ressort à lames ou à ressort Belleville,
- des dispositifs à ressort en spirale,
- des ressorts hélicoïdaux,
- des ressorts de torsion, en particulier des ressorts à barre de torsion,
- des dispositifs à ressort élastomère,
- des dispositifs à ressort magnétiques et électromagnétiques ou une combinaison composée de plusieurs desdits dispositifs.

3. Machine-outil selon l'une quelconque des revendications précédentes, **caractérisée en ce que** le dispositif de maintien (4) est monté de manière à pouvoir tourner dans au moins une direction de rotation et/ou est monté de manière à pouvoir être déplacé par translation dans au moins une direction.

4. Machine-outil selon l'une quelconque des revendications précédentes, **caractérisée en ce que** le dispositif de logement d'outil (1) présente au moins un, de préférence une pluralité de dispositifs de maintien, de manière préférée trois ou quatre ou cinq ou six desdits dispositifs de maintien (4), ou de manière particulièrement préférée deux desdits dispositifs de maintien (4).

5. Machine-outil selon la revendication 4, **caractérisée en ce que** respectivement deux desdits dispositifs de maintien (4) sont montés de manière à pouvoir être déplacés sensiblement en sens contraire.

6. Machine-outil selon l'une quelconque des revendications précédentes, **caractérisée en ce**
**que** le dispositif de blocage (5) présente une première section de surface de blocage (5a) et une deuxième section de surface de blocage (5b),
**que** ladite première section de surface de blocage (5a) établit un contact indirectement ou directement avec ladite deuxième section de surface de blocage (5b) ; et qu'au moins une composante de ladite force de serrage (3a) est dirigée sensiblement de manière parallèle par rapport à au moins une normale sur ladite première section de surface de blocage (5a) ou ladite deuxième section de surface de blocage (5b),
sachant que ladite première section de surface de blocage (5a) est de manière préférée montée, en particulier est montée sur des paliers lisses ou encore de préférence sur des paliers à roulement, dans la position de blocage par rapport à ladite deuxième section de surface de blocage (5b).

7. Machine-outil selon l'une quelconque des revendications précédentes, **caractérisée en ce**
**qu'**une normale (7a) forme, sur ladite surface de contact (7) en un point de contact avec ledit élément de déplacement (6), lorsque le dispositif de blocage (5) se trouve sensiblement dans une desdites positions de blocage, un angle γ₁ avec ladite direction de déplacement (6a) de l'élément de déplacement (6), et
**que** ledit angle γ₁ est de préférence supérieur à 80°, de manière préférée est supérieur à 90° et de manière particulièrement préférée est supérieur à 120°, et/ou
**que** γ₁ est inférieur ou égal à 315°, de manière préférée est inférieur à 270° et de manière particulièrement préférée est inférieur à 210° et de manière particulièrement préférée est sensiblement de 186°.

8. Machine-outil selon l'une quelconque des revendications précédentes, **caractérisée en ce**
**qu'**une normale (7a) forme, sur la surface de contact (7) en un point de contact avec l'élément de déplacement (6), lorsque le dispositif de blocage (5) se trouve sensiblement dans une desdites positions de déblocage, un angle γ₂ avec ladite direction de déplacement (6a) de l'élément de déplacement (6), et
**que** ledit angle γ₂ est de préférence inférieur ou égal à 180°, de manière préférée est inférieur à 135° et de manière particulièrement préférée est inférieur à 115° et encore de préférence est supérieur ou égal à 80°, de manière préférée est supérieur à 95° et de manière particulièrement préférée est supérieur à 105°.

9. Machine-outil selon l'une quelconque des revendications précédentes, **caractérisée en ce que** le dispositif de blocage (5) présente un premier élément formant levier (10), un deuxième élément formant levier (11) et un élément de liaison (12), sachant que de manière préférée ledit premier et ledit deuxième élément formant levier (10, 11) sont montés de manière à pouvoir tourner, et
ledit premier élément formant levier (10) peut être mis en contact par ledit élément de liaison (12) dans une première zone de contact et ledit deuxième élément formant levier (11) peut être mis en contact par ledit élément de liaison (12) dans une deuxième zone de contact.

10. Machine-outil selon la revendication 9, **caractérisée en ce**
**que** dans une desdites positions de blocage, une droite de liaison partant de ladite première zone de contact à travers ladite deuxième zone de contact présente un premier espacement a1 par rapport à un point de rotation d2 du deuxième élément formant levier (11),
**qu'**une première action de force F1 peut être transférée sur ledit deuxième élément formant levier (11) en direction de ladite droite de liaison par ledit premier élément formant levier (10), et
**qu'**un premier couple de rotation T1 peut être transféré sur ledit deuxième élément formant levier (11) du fait dudit espacement et de ladite première action de force F1.

11. Machine-outil selon l'une quelconque des revendications 9 ou 10, **caractérisée en ce**
**qu'**une deuxième action de force F2 peut être transférée sur ledit deuxième élément formant levier (11) au moyen dudit transfert de force indirect ou direct par ledit dispositif outil (8) sur ledit dispositif de blocage (5) dans une desdites positions de blocage,
**qu'**au moins une direction d'action de ladite deuxième action de force F2 est tenue à distance d'un espacement a2 dudit point de rotation d2 dudit deuxième dispositif de levier, et
**qu'**un deuxième couple de rotation T2 peut être transféré sur ledit deuxième élément formant levier (11) du fait dudit espacement a2 et de ladite deuxième action de force F2.

12. Machine-outil selon l'une quelconque des revendications 10 ou 11, **caractérisée en ce que** ledit premier couple de rotation T1 est contraire audit deuxième couple de rotation T2.

13. Machine-outil selon l'une quelconque des revendications 9 à 12, **caractérisée en ce**
**que** dans une desdites positions de déblocage, une droite de liaison partant de ladite première zone de contact à travers ladite deuxième zone de contact présente un troisième espacement a3 par rapport audit point de rotation d2 du deuxième élément formant levier (11),
**qu'**une troisième action de force F3 peut être transférée sur ledit deuxième élément formant levier (11) en direction de ladite droite de liaison par ledit premier élément formant levier (10), et
**qu'**un troisième couple de rotation T3 peut être transféré sur ledit deuxième élément formant levier (11) du fait dudit espacement a3 et de ladite troisième action de force F3, sachant que de manière préférée la direction dudit troisième couple de rotation T3 est contraire à la direction dudit premier couple de rotation T1.

14. Machine-outil selon l'une quelconque des revendications précédentes, **caractérisée en ce**
**qu'**elle présente un dispositif de raccordement pourvu d'une zone de transfert de couple de rotation (9),
**que** la zone de transfert de couple de rotation (9) servant à transférer une force d'entraînement sur le dispositif outil (8) présente au moins deux zones de surface de sortie (9a) disposées à distance par rapport audit axe d'entraînement (2), pourvues respectivement d'une pluralité de points de surface (9b),
**que** des plans tangentiels (17) sont inclinés au niveau desdits points de surface (9b) par rapport à un plan axial (15), qui forme ledit axe d'entraînement (2), et
**que** lesdits plans tangentiels (17) sont inclinés par rapport à un plan radial (16), qui s'étend de manière perpendiculaire par rapport à l'axe d'entraînement (2),
sachant que de manière préférée au moins une zone de surface de sortie, de manière préférée une pluralité et de manière particulièrement préférée toutes lesdites zones de surface de sortie sont au moins par endroits sensiblement planes et/ou incurvées.

15. Machine-outil selon la revendication 14, **caractérisée en ce**
**que** ladite zone de transfert de couple de rotation (9) présente au moins un premier plan de délimitation supérieur (13) et au moins un deuxième plan de délimitation inférieur (14),
**que** lesdits plans de délimitation (13, 14) sont disposés sensiblement de manière perpendiculaire par rapport audit axe d'entraînement (2),
**que** lesdits plans de délimitation (13, 14) sont tenus à distance l'un de l'autre, et
**que** chacune desdites zones de surface de sortie (9a) est disposée entre ledit premier plan de délimitation supérieur (13) et ledit deuxième plan de délimitation inférieur (14),
sachant que de manière préférée une pluralité, de préférence toutes les zones de surface de sortie (9a) s'étendent entre un unique premier plan de délimitation supérieur (13) et un unique deuxième plan de délimitation inférieur (14).

16. Machine-outil selon l'une quelconque des revendications 14 à 15, **caractérisée en ce que** ladite zone de transfert de couple de rotation (9) présente une pluralité de zones de surface de sortie (9a), qui sont disposées de manière symétrique en rotation autour de l'axe d'entraînement (2).

17. Machine-outil selon l'une quelconque des revendications 14 à 16, **caractérisée en ce**
**qu'**au moins respectivement deux, de préférence plusieurs desdites zones de surface de sortie (9a) sont disposées de manière symétrique par rapport à un plan de symétrie, que l'axe d'entraînement (2) se trouve dans ledit plan de symétrie, et
**que** de préférence encore lesdites zones de surface de sortie (9a) sont disposées sensiblement bout à bout.

18. Machine-outil selon l'une quelconque des revendications 14 à 17, **caractérisée en ce**
**que** ladite zone de transfert de couple de rotation (9) présente une paroi latérale,
**que** ladite paroi latérale s'étend de manière radiale à distance de l'axe d'entraînement (2),
**que** ladite paroi latérale présente les zones de surface de sortie (9a),
sachant que de manière préférée la paroi latérale s'étend tout autour de l'axe d'entraînement (2) sensiblement de manière radialement fermée.

19. Machine-outil selon l'une quelconque des revendications 14 à 18, **caractérisée en ce qu'**une normale sur un desdits plans tangentiels (17) est orientée de manière à s'éloigner de l'axe d'entraînement (2) dans une direction radiale, de préférence toutes les normales desdits plans tangentiels (17) sont orientées de manière à s'éloigner de l'axe d'entraînement (2) dans une direction radiale ; ou
qu'une normale sur un desdits plans tangentiels (17) est orientée en direction de l'axe d'entraînement (2) dans une direction radiale, de préférence toutes les normales desdits plans tangentiels (17) sont orientées en direction de l'axe d'entraînement (2) dans une direction radiale.

20. Machine-outil selon l'une quelconque des revendications 14 à 19, **caractérisée en ce**
**que** l'angle α est formé entre un desdits plans tangentiels (17) et ledit plan radial (16), sachant que ledit plan radial (16) est disposé de manière perpendiculaire par rapport à l'axe d'entraînement (2), sachant que l'angle α est de préférence inférieur à 90°, de manière préférée est inférieur à 80° et de manière particulièrement préférée est inférieur à 75°, encore de préférence l'angle α est supérieur à 0°, de manière préférée est supérieur à 45° et de manière particulièrement préférée est supérieur à 60°, encore de préférence l'angle α se situe dans une plage allant de 62,5° à 72,5°.

21. Machine-outil selon l'une quelconque des revendications 14 à 20, **caractérisée en ce**
**que** l'angle β est formé entre un desdits plans tangentiels (17) et ledit plan axial (15), sachant que l'axe d'entraînement (2) se trouve dans ledit plan axial (15), sachant que l'angle β est de préférence inférieur à 90°, de manière préférée inférieur à 70° et de manière particulièrement préférée inférieur à 65° et encore de préférence l'angle β est supérieur à 0°, de manière préférée est supérieur à 15° et de manière particulièrement préférée est supérieur à 30°, encore de préférence l'angle β est sensiblement de 30°, 45° ou de 60°.

22. Machine-outil selon l'une quelconque des revendications 14 à 21, **caractérisée en ce que** ladite zone de transfert de couple de rotation (9) présente un nombre pair de zones de surface de sortie (9a), de préférence 4 ou plus, de manière préférée 8 ou plus et de manière particulièrement préférée 16 ou plus, et encore de préférence 64 ou moins, de manière préférée 48 ou moins et de manière particulièrement préférée 32 ou moins.

23. Machine-outil selon l'une quelconque des revendications 14 à 22, **caractérisée en ce que** lesdites zones de surface de sortie (9a) sont disposées sensiblement à la manière d'une étoile, de préférence sous la forme d'un polygone en forme d'étoile.

24. Machine-outil selon l'une quelconque des revendications précédentes, **caractérisée en ce**
**que** la machine-outil (22) présente une section de codage, que ladite section de codage présente au moins une surface de section transversale, et
**que** ladite section de codage présente une première extension sensiblement dans une direction perpendiculaire par rapport à ladite surface de section transversale, de préférence ladite première extension est dirigée en direction dudit axe d'entraînement (2),
sachant qu'en particulier une desdites sections de codage ou plusieurs desdites sections de codage sont disposées de manière symétrique en rotation par rapport audit axe d'entraînement (2).

25. Machine-outil selon la revendication 24, **caractérisée en ce que** la forme au moins d'une, de préférence de toutes les sections de codage est choisie parmi un groupe de formes, qui comprend au moins :
- un polygone pourvu d'une pluralité d'angles, de préférence 3, 4, 5, 6, 7, 8 ou plus ;
- un cercle, et
- une ellipse.

26. Système de machine-outil comprenant une machine-outil (22) selon au moins l'une quelconque des revendications précédentes et au moins un dispositif outil (8) destiné à être utilisé avec ladite machine-outil (22),
sachant que le dispositif de maintien (4) présente au moins une surface active (4c) servant à transférer une action de force sur le dispositif outil (8), laquelle est délimitée par une surface de délimitation de dispositif de maintien (4g) sur le côté opposé à la machine-outil (8) en direction de l'axe d'entraînement (2),
sachant que le dispositif outil (8) présente une zone de raccordement d'outil (8a) et un axe de rotation d'outil (8b), sachant que la zone de raccordement d'outil (8a) présente au moins une paroi latérale (8i) et s'étend dans une direction axiale entre un premier plan orthogonal (8c) et un deuxième plan orthogonal (8d), sachant que lesdits plans (8c, 8d) sont disposés de manière orthogonale par rapport à l'axe de rotation d'outil (8b), sachant que ladite paroi latérale (8i) est tenue à distance de manière radiale de l'axe de rotation d'outil (8b) et présente une extension axiale dans la direction de l'axe de rotation d'outil (8b),
**caractérisé en ce**
**que** le dispositif de maintien (4) exerce une action de force sur le dispositif outil (8) dans la zone de la surface active (4c), et
**que** ladite action de force présente au moins une composante en direction de l'axe de rotation d'outil (8b).

27. Système de machine-outil selon la revendication 26, **caractérisé en ce que** la surface de délimitation de dispositif de maintien (4g) et la surface active (4c) du dispositif de maintien (4) se situent entre le premier plan orthogonal (8c) et le deuxième plan orthogonal (8d) de la zone de raccordement d'outil (8a) lorsque le dispositif outil (8) est fixé au niveau de la machine-outil (22), de préférence dans la zone de l'extension axiale des zones de surface d'entraînement d'outil (8f), sachant que la paroi latérale (8i) du dispositif outil (8) présente de manière préférée des zones de surface d'entraînement d'outil (8f) et s'étend dans une direction radiale au moins par endroits entre une première distance et une deuxième distance radiale par rapport audit axe de rotation d'outil (8b), et
qu'au moins une desdites sections est mise au point aux fins du transfert de couple de rotation de la machine-outil (22) sur le dispositif outil (8).
